(19)

Europäisches
Patentamt
European
Patent Office
Office européen
des brevets

(11)  **EP 4 213 453 A1**

(12)  **EUROPEAN PATENT APPLICATION**
published in accordance with Art. 153(4) EPC

(43) Date of publication:
**19.07.2023  Bulletin 2023/29**

(21) Application number: **21866013.2**

(22) Date of filing: **08.09.2021**

(51) International Patent Classification (IPC):
***H04L 27/26*** (2006.01)

(52) Cooperative Patent Classification (CPC):
**Y02D 30/70**

(86) International application number:
**PCT/CN2021/117273**

(87) International publication number:
**WO 2022/052960 (17.03.2022 Gazette 2022/11)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority:  **09.09.2020  CN 202010941423
07.09.2021  CN 202111044240**

(71) Applicants:
• **Beijing Smartchip Microelectronics Technology
Company Limited
Beijing 100192 (CN)**
• **State Grid Corporation of China
Beijing 100031 (CN)**

(72) Inventors:
• **ZHAO, Dongyan
Beijing 100192 (CN)**
• **ZHAO, Nan
Beijing 100192 (CN)**
• **LI, Dejian
Beijing 100192 (CN)**
• **ZHAO, Xu
Beijing 100192 (CN)**
• **HU, Yi
Beijing 100192 (CN)**
• **LIU, Hao
Beijing 100192 (CN)**
• **SHAO, Jin
Beijing 100192 (CN)**

(74) Representative: **Meyer, Thorsten et al
Meyer Patentanwaltskanzlei
Pfarrer-Schultes-Weg 14
89077 Ulm (DE)**

(54)  **LINEAR FREQUENCY MODULATION COMMUNICATION SYSTEM AND CHANNEL ESTIMATION METHOD AND APPARATUS THEREFOR, MEDIUM, AND CHIP**

(57)  The present disclosure provides a linear frequency modulation communications system and a channel estimation method and apparatus therefor, a medium, and a chip. The method includes the following steps: demodulating preceding and next data symbols of a next pilot symbol in advance according to a channel estimate of a current pilot symbol, to obtain content of the preceding and next data symbols of the next pilot symbol; and adjusting a start location of the next pilot symbol according to content of the next pilot symbol and the content of the preceding and next data symbols of the next pilot symbol, and performing channel estimation on the next pilot symbol at the start location, to obtain a channel estimate of the next pilot symbol. Because the start location of the next pilot symbol is adjusted according to the content of the next pilot symbol and the content of the preceding and next data symbols, and channel estimation is performed according to the adjusted start location, channel estimation performance and demodulation performance of a linear frequency modulation signal can be effectively improved.

Demodulate preceding and next data symbols of a next pilot symbol in advance according to a channel estimate of a current pilot symbol, to obtain content of the preceding and next data symbols of the next pilot symbol — S101

Adjust a start location of the next pilot symbol according to content of the next pilot symbol and the content of the preceding and next data symbols of the next pilot symbol, and perform channel estimation on the next pilot symbol at the start location, to obtain a channel estimate of the next pilot symbol — S102

**FIG. 2**

EP 4 213 453 A1

**EP 4 213 453 A1**

**Description**

**CROSS REFERENCE TO RELATED APPLICATION (S)**

This patent application claims the priority of Chinese Patent Application No. 202010941423.9 filed on September 9, 2020 and entitled linear frequency modulation communications system and channel estimation method and apparatus therefor, and storage medium, the disclosure of which is incorporated by reference herein in its entirety as part of the present application.

**TECHNICAL FIELD**

The present disclosure relates to the field of communication technologies, and in particular, to a linear frequency modulation communications system and a channel estimation method and apparatus therefor, a medium, and a chip.

**BACKGROUND**

A linear frequency modulation signal is also called a chirp (chirp) signal, and correspondingly, a linear frequency modulation technology is also called a Chirp Spread Spectrum (CSS) technology. The CSS technology has advantages such as high anti-interference capability, low power consumption, and high anti-multipath effect capability, and better communication performance can be achieved by modulating chirp signals in different digital modulation manners. Therefore, the CSS technology is widely used in radar detection, underwater acoustic communication, laser communication, ultra-wideband communication, and Long Range Radio (LORA) communication.

Usually, there are two digital modulation manners for chirp signals, namely, Binary Orthogonal Keying (BOK) and direct modulation (DM). The DM manner is to first modulate a signal in another modulation manner such as differential Phase Shift Keying (PSK), differential Quadrature Phase Shift Keying (QPSK), and Binary Phase Shift Keying (BPSK), and then multiply the modulated signal by a chirp signal to achieve spread spectrum. The chirp signal is similar to a PN (Pseudo Noise) code in Direct Sequence Spread Spectrum (DSSS), so that the DM manner is simple in structure and easy to implement. In addition, there may be only one type of chirp signal in a whole system, making it easy to receive and process signals. The manner is adopted in CSS identified in IEEE 802.15.4a.

However, in a DM system of a chirp signal, channel estimation needs to be performed first to obtain a multipath impulse response, and then the chirp signal is demodulated. Therefore, accuracy of channel estimation affects demodulation performance of the whole system. So we use the pilot symbols inserted into the data symbols to estimate the channel impulse response, and then channel estimation is performed on the pilot symbol in a matched filtering channel estimation manner or a fast Fourier transform (FFT) channel estimation manner, to obtain a channel estimate. In an actual system, however, due to impact of multipath, a transmitted filter and a received filter, Inter Symbol Interference (ISI) exists, leading to an inaccurate channel estimate.

**SUMMARY**

To overcome the foregoing technical problems, it's necessary to provide a linear frequency modulation communications system and a channel estimation method and apparatus therefor, a medium, and a chip that can effectively ensure accuracy of a channel estimate and improve channel estimation performance and demodulation performance of a linear frequency modulation signal.

In some embodiments, a first channel estimation method for a linear frequency modulation communications system is provided, including the following steps: demodulating preceding and next data symbols of a next pilot symbol in advance according to a channel estimate of a current pilot symbol, to obtain content of the preceding and next data symbols of the next pilot symbol; and adjusting a start location of the next pilot symbol according to content of the next pilot symbol and the content of the preceding and next data symbols of the next pilot symbol, and performing channel estimation on the next pilot symbol at the start location, to obtain a channel estimate of the next pilot symbol. In the method, the start location of the next pilot symbol is adjusted according to the content of the next pilot symbol and the content of the preceding and next data symbols, and channel estimation is performed according to the adjusted start location, so that accuracy of the channel estimate is improved. In this way, channel estimation performance and demodulation performance of a linear frequency modulation signal are effectively improved.

Further, optionally, the adjusting a start location of the next pilot symbol according to content of the next pilot symbol and the content of the preceding and next data symbols of the next pilot symbol, and performing channel estimation on the next pilot symbol at the start location, to obtain a channel estimate of the next pilot symbol includes: if the content of the next data symbol of the next pilot symbol is different from the content of the next pilot symbol, adjusting the start location of the next pilot symbol to a first location, and performing channel estimation on the next pilot

2

symbol at the first location, to obtain the channel estimate of the next pilot symbol; otherwise, adjusting the start location of the next pilot symbol to a second location, and performing channel estimation on the next pilot symbol at the second location, to obtain the channel estimate of the next pilot symbol, where the first location is ahead of the second location.

Further, optionally, channel estimation is performed on the next pilot symbol at the start location in any of an FFT channel estimation manner, a matched filtering channel estimation manner, a least square (LS) channel estimation manner and a minimum mean square error (MMSE) channel estimation manner, to obtain the channel estimate of the next pilot symbol.

Further, optionally, before the demodulating preceding and next data symbols of a next pilot symbol in advance according to a channel estimate of a current pilot symbol, to obtain content of the preceding and next data symbols of the next pilot symbol, the method further includes filtering the channel estimate of the current pilot symbol.

In some embodiments, a second channel estimation method for a linear frequency modulation communications system is provided, including the following steps: demodulating preceding and next data symbols of a next pilot symbol in advance according to a channel estimate of a current pilot symbol, to obtain content of the preceding and next data symbols of the next pilot symbol, and estimating a delay spread or a maximum path of a channel; and adjusting a start location of the next pilot symbol according to content of the next pilot symbol, the content of the preceding and next data symbols of the next pilot symbol, and the delay spread or the maximum path, and performing channel estimation on the next pilot symbol at the start location, to obtain a channel estimate of the next pilot symbol. In the method, the start location of the next pilot symbol is adjusted according to the content of the next pilot symbol, the content of the preceding and next data symbols, and the delay spread or the maximum path of the channel, and channel estimation is performed according to the adjusted start location. This can further improve accuracy of the channel estimate and effectively improve channel estimation performance and demodulation performance of a linear frequency modulation signal.

Further, optionally, the adjusting a start location of the next pilot symbol according to content of the next pilot symbol, the content of the preceding and next data symbols of the next pilot symbol, and the delay spread or the maximum path, and performing channel estimation on the next pilot symbol at the start location, to obtain a channel estimate of the next pilot symbol includes: when the delay spread or the maximum path is less than a preset threshold, if the content of the next data symbol of the next pilot symbol is the same as the content of the next pilot symbol, adjusting the start location of the next pilot symbol to a second location, and performing channel estimation on the next pilot symbol at the second location, to obtain the channel estimate of the next pilot symbol; otherwise, adjusting the start location of the next pilot symbol to a first location, and performing channel estimation on the next pilot symbol at the first location, to obtain the channel estimate of the next pilot symbol, where the first location is ahead of the second location; or when the delay spread or the maximum path is equal to or greater than the preset threshold, if the content of the preceding data symbol of the next pilot symbol is the same as the content of the next pilot symbol, adjusting the start location of the next pilot symbol to the first location, and performing channel estimation on the next pilot symbol at the first location, to obtain the channel estimate of the next pilot symbol; otherwise, adjusting the start location of the next pilot symbol to the second location, and performing channel estimation on the next pilot symbol at the second location, to obtain the channel estimate of the next pilot symbol.

Further, optionally, channel estimation is performed on the next pilot symbol at the start location in any of an FFT channel estimation manner, a matched filtering channel estimation manner, an LS channel estimation manner and an MMSE channel estimation manner, to obtain the channel estimate of the next pilot symbol.

Further, optionally, before the demodulating preceding and next data symbols of a next pilot symbol in advance according to a channel estimate of a current pilot symbol, to obtain content of the preceding and next data symbols of the next pilot symbol, the method further includes filtering the channel estimate of the current pilot symbol.

In some embodiments, a third channel estimation method for a linear frequency modulation communications system is provided, including the following steps: performing channel estimation on each pilot symbol in a first channel estimation manner and a second channel estimation manner, to obtain a first channel estimate and a second channel estimate, where the first channel estimation manner includes either of an LS channel estimation manner and an MMSE channel estimation manner, and the second channel estimation manner includes a matched filtering channel estimation manner; demodulating preceding and next data symbols of a next pilot symbol in advance according to a channel estimate of a current pilot symbol, to obtain content of the preceding and next data symbols of the next pilot symbol; and selecting a channel estimate of the next pilot symbol from the first channel estimate and the second channel estimate according to the content of the preceding and next data symbols of the next pilot symbol, to obtain a channel estimate of each pilot symbol. In the method, a suitable channel estimate is selected from a plurality of channel estimates according to content of the next pilot symbol and the content of the preceding and next data symbols, so that accuracy of the channel estimate is improved. In this way, channel estimation performance and demodulation performance of a linear frequency modulation signal are effectively improved.

Further, optionally, the selecting a channel estimate of the next pilot symbol from the first channel estimate and the second channel estimate according to the content of the preceding and next data symbols of the next pilot symbol includes: selecting the first channel estimate as the channel estimate of the next pilot symbol if the content of the next data symbol of the next pilot symbol is different from content of the next pilot symbol; otherwise, selecting the second channel estimate as the channel estimate of the next pilot symbol.

Further, optionally, when the current pilot symbol is a first pilot symbol, the method includes regarding the second channel estimate as the channel estimate of the first pilot symbol by default.

Further, optionally, before selecting the channel estimate of the next pilot symbol as the channel estimate of the current pilot symbol to demodulate in advance the preceding and next data symbols of the next pilot symbol, the method further includes filtering the selected channel estimate of the next pilot symbol.

In some embodiments, a fourth channel estimation method for a linear frequency modulation communications system is provided, including the following steps: performing channel estimation on each pilot symbol in a first channel estimation manner and a second channel estimation manner, to obtain a first channel estimate and a second channel estimate, where the first channel estimation manner is an FFT channel estimation manner, and the second channel estimation manner is a matched filtering channel estimation manner; demodulating preceding and next data symbols of a next pilot symbol in advance according to a channel estimate of a current pilot symbol, to obtain content of the preceding and next data symbols of the next pilot symbol, and estimating a delay spread or a maximum path of a channel; and selecting a channel estimate of the next pilot symbol from the first channel estimate and the second channel estimate according to the content of the preceding and next data symbols of the next pilot symbol and the delay spread or the maximum path, to obtain a channel estimate of each pilot symbol. In the method, a suitable channel estimate is selected from a plurality of channel estimates according to content of the next pilot symbol, the content of the preceding and next data symbols of the next pilot symbol, and the delay spread or the maximum path, so that accuracy of the channel estimate is improved. In this way, channel estimation performance and demodulation performance of a linear frequency modulation signal are effectively improved.

Further, optionally, the selecting a channel estimate of the next pilot symbol from the first channel estimate and the second channel estimate according to the content of the preceding and next data symbols of the next pilot symbol and the delay spread or the maximum path includes: when the delay spread or the maximum path is equal to or greater than a preset threshold, if the content of the preceding data symbol of the next pilot symbol is the same as content of the next pilot symbol, selecting the first channel estimate as the channel estimate of the next pilot symbol; otherwise, selecting the second channel estimate as the channel estimate of the next pilot symbol; or when the delay spread or the maximum path is less than the preset threshold, if the content of the next data symbol of the next pilot symbol is the same as the content of the next pilot symbol, selecting the second channel estimate as the channel estimate of the next pilot symbol; otherwise, selecting the first channel estimate as the channel estimate of the next pilot symbol.

Further, optionally, when the current pilot symbol is the first pilot symbol, the method includes regarding the second channel estimate as the channel estimate of the first pilot symbol by default.

Further, optionally, before selecting the channel estimate of the next pilot symbol as the channel estimate of the current pilot symbol to demodulate in advance the preceding and next data symbols of the next pilot symbol, the method further includes filtering the selected channel estimate of the next pilot symbol.

In some embodiments, a fifth channel estimation method for a linear frequency modulation communications system is provided, including the following steps: performing channel estimation on each pilot symbol in a first channel estimation manner and a second channel estimation manner, to obtain a first channel estimate and a second channel estimate, where the first channel estimation manner includes either of an LS channel estimation manner and an MMSE channel estimation manner, and the second channel estimation manner includes a matched filtering channel estimation manner; demodulating preceding and next data symbols of a next pilot symbol in advance according to a channel estimate of a current pilot symbol, to obtain content of the preceding and next data symbols of the next pilot symbol, and estimating a delay spread or a maximum path of a channel; and selecting a channel estimate of the next pilot symbol from the first channel estimate and the second channel estimate according to the content of the preceding and next data symbols of the next pilot symbol and the delay spread or the maximum path, to obtain a channel estimate of each pilot symbol. In the method, a suitable channel estimate is selected from a plurality of channel estimates according to content of the next pilot symbol, the content of the preceding and next data symbols, and the delay spread or the maximum path of the channel. This can further improve accuracy of the channel estimate and effectively improve channel estimation performance and demodulation performance of a linear frequency modulation signal.

Further, optionally, the selecting a channel estimate of the next pilot symbol from the first channel estimate and the second channel estimate according to the content of the preceding and next data symbols of the next pilot symbol and the delay spread or the maximum path includes: when the delay spread or the maximum path is equal to or greater than a preset threshold, if the content of the preceding data symbol of the next pilot symbol is the same as content of the next pilot symbol, selecting the first channel estimate as the channel estimate of the next pilot symbol; otherwise, selecting the second channel estimate as the channel estimate of the next pilot symbol; or when the delay spread or the maximum path is less than the preset threshold, if the content of the next data symbol of the next pilot symbol is the same as the content of the next pilot symbol, selecting the second channel estimate as the channel estimate of the next pilot symbol; otherwise, selecting the first channel estimate as the channel estimate of the next pilot symbol.

Further, optionally, when the current pilot symbol is the first pilot symbol, the method includes regarding the second channel estimate as the channel estimate of the first pilot symbol by default.

Further, optionally, before selecting the channel estimate of the next pilot symbol as the channel estimate of the current pilot symbol to demodulate in advance the preceding and next data symbols of the next pilot symbol, the method further includes filtering the selected channel estimate of the next pilot symbol.

In addition, for the second, the fourth, and the fifth channel estimation methods for a linear frequency modulation communications system, a same manner may be used to estimate a delay spread or a maximum path of the channel. This may specifically include: obtaining a first delay spread or a first maximum path according to a synchronous signal; obtaining a second delay spread or a second maximum path according to the pilot symbol; and estimating the delay spread of the channel according to at least one of the first delay spread and the second delay spread, or estimating the maximum path of the channel according to at least one of the first maximum path and the second maximum path.

Further, optionally, the obtaining a first delay spread or a first maximum path according to a synchronous signal includes: performing, if the synchronous signal is sent in an up chirp manner, pointwise multiplication on a received synchronous signal and a conjugate of the sent synchronous signal, and performing IFFT, to obtain a first power spectrum; or performing, if the synchronous signal is sent in a down chirp manner, pointwise multiplication on a received synchronous signal and a conjugate of the sent synchronous signal, and performing FFT, to obtain a second power spectrum; and obtaining the first delay spread according to the first power spectrum or the second power spectrum through calculation, or obtaining the first maximum path according to the first power spectrum or the second power spectrum through calculation.

Further, optionally, the obtaining a second delay spread or a second maximum path according to the pilot symbol includes: performing, if the pilot symbol is sent in an up chirp manner, pointwise multiplication on a received pilot symbol and a conjugate of the sent pilot symbol, and performing IFFT, to obtain a third power spectrum; or performing, if the pilot symbol is sent in a down chirp manner, pointwise multiplication on a received pilot symbol and a conjugate of the sent pilot symbol, and performing FFT, to obtain a fourth power spectrum; and obtaining the second delay spread according to the third power spectrum or the fourth power spectrum through calculation, or obtaining the second maximum path according to the third power spectrum or the fourth power spectrum through calculation.

Further, optionally, the estimating the delay spread of the channel according to at least one of the first delay spread and the second delay spread includes: filtering the first delay spread to obtain the delay spread of the channel, or filtering the second delay spread to obtain the delay spread of the channel, or performing weighting calculation on the filtered first delay spread and the filtered second delay spread, to obtain the delay spread of the channel.

Further, optionally, the estimating the maximum path of the channel according to at least one of the first maximum path and the second maximum path includes: filtering the first maximum path to obtain the maximum path of the channel, or filtering the second maximum path to obtain the maximum path of the channel, or performing weighting calculation on the filtered first maximum path and the filtered second maximum path, to obtain the maximum path of the channel.

In some embodiments, a first channel estimation apparatus for a linear frequency modulation communications system is provided, including: a first demodulation module, configured to demodulate preceding and next data symbols of a next pilot symbol in advance according to a channel estimate of a current pilot symbol, to obtain content of the preceding and next data symbols of the next pilot symbol; and a first channel estimation module, configured to adjust a start location of the next pilot symbol according to content of the next pilot symbol and the content of the preceding and next data symbols of the next pilot symbol, and perform channel estimation on the next pilot symbol at the start location, to obtain a channel estimate of the next pilot symbol. According to the apparatus, the start location of the next pilot symbol is adjusted according to the content of the next pilot symbol and the content of the preceding and next data symbols, and channel estimation is performed according to the adjusted start location, so that accuracy of the channel estimate is improved. In this way, channel estimation performance and demodulation performance of a linear frequency modulation signal are effectively improved.

Further, optionally, the first channel estimation module is specifically configured to: if the content of the next data symbol of the next pilot symbol is different from the content of the next pilot symbol, adjust the start location of the next pilot symbol to a first location, and perform channel estimation on the next pilot symbol at the first location, to obtain the channel estimate of the next pilot symbol; otherwise, adjust the start location of the next pilot symbol to a second location, and perform channel estimation on the next pilot symbol at the second location, to obtain the channel estimate of the next pilot symbol, where the first location is ahead of the second location.

Further, optionally, the first channel estimation module is specifically configured to: perform channel estimation on the next pilot symbol at the start location in any of an FFT channel estimation manner, a matched filtering channel estimation manner, an LS channel estimation manner and an MMSE channel estimation manner, to obtain the channel estimate of the next pilot symbol.

Further, optionally, the first channel estimation apparatus for a linear frequency modulation communications system further includes a first filtering module, configured to: before the first demodulation module demodulates preceding and next data symbols of a next pilot symbol in advance according to a channel estimate of a current pilot symbol, to obtain content of the preceding and next data symbols of the next pilot symbol, filter the channel estimate of the current pilot symbol.

In some embodiments, a second channel estimation apparatus for a linear frequency modulation communications system is provided, including: a first demodulation module, configured to demodulate preceding and next data symbols of a next pilot symbol in advance according to a channel estimate of a current pilot symbol, to obtain content of the preceding and next data symbols of the next pilot symbol; a first delay spread estimation module, configured to estimate a delay spread or a maximum path of a channel; and a first channel estimation module, configured to adjust a start location of the next pilot symbol according to content of the next pilot symbol, the content of the preceding and next data symbols of the next pilot symbol, and the delay spread or the maximum path of the channel, and perform channel estimation on the next pilot symbol at the start location, to obtain a channel estimate of the next pilot symbol. According to the apparatus, the start location of the next pilot symbol is adjusted according to the content of the next pilot symbol, the content of the preceding and next data symbols, and the delay spread or the maximum path of the channel, and channel estimation is performed according to the adjusted start location. This can further improve accuracy of the channel estimate and effectively improve channel estimation performance and demodulation performance of a linear frequency modulation signal.

Further, optionally, the first channel estimation module is specifically configured to: when the delay spread or the maximum path is less than a preset threshold, if the content of the next data symbol of the next pilot symbol is the same as the content of the next pilot symbol, adjust the start location of the next pilot symbol to a second location, and perform channel estimation on the next pilot symbol at the second location, to obtain the channel estimate of the next pilot symbol; otherwise, adjust the start location of the next pilot symbol to a first location, and perform channel estimation on the next pilot symbol at the first location, to obtain the channel estimate of the next pilot symbol, where the first location is ahead of the second location; or when the delay spread or the maximum path is equal to or greater than the preset threshold, if the content of the preceding data symbol of the next pilot symbol is the same as the content of the next pilot symbol, adjust the start location of the next pilot symbol to the first location, and perform channel estimation on the next pilot symbol at the first location, to obtain the channel estimate of the next pilot symbol; otherwise, adjust the start location of the next pilot symbol to the second location, and perform channel estimation on the next pilot symbol at the second location, to obtain the channel estimate of the next pilot symbol.

Further, optionally, the first channel estimation module is specifically configured to: perform channel estimation on the next pilot symbol at the start location in any of an FFT channel estimation manner, a matched filtering channel estimation manner, an LS channel estimation manner and an MMSE channel estimation manner, to obtain the channel estimate of the next pilot symbol.

Further, optionally, the second channel estimation apparatus for a linear frequency modulation communications system further includes: a first filtering module, configured to: before the first demodulation module demodulates preceding and next data symbols of a next pilot symbol in advance according to a channel estimate of a current pilot symbol, to obtain content of the preceding and next data symbols of the next pilot symbol, filter the channel estimate of the current pilot symbol.

In some embodiments, a third channel estimation apparatus for a linear frequency modulation communications system is provided, including: a second channel estimation module, configured to perform channel estimation on each pilot symbol in a first channel estimation manner and a second channel estimation manner, to obtain a first channel estimate and a second channel estimate, where the first channel estimation manner includes either of an LS channel estimation manner and an MMSE channel estimation manner, and the second channel estimation manner includes a matched filtering channel estimation manner; a second demodulation module, configured to demodulate preceding and next data symbols of a next pilot symbol in advance according to a channel estimate of a current pilot symbol, to obtain content of the preceding and next data symbols of the next pilot symbol; and a first selection module, configured to select a channel estimate of the next pilot symbol from the first channel estimate and the second channel estimate according to the content of the preceding and next data symbols of the next pilot symbol, to obtain a channel estimate of each pilot symbol. According to the apparatus, a suitable channel estimate is selected from a plurality of channel estimates according to content of the next pilot symbol and the content of the preceding and next data symbols, so that accuracy of the channel estimate is improved. In this way, channel estimation performance and demodulation performance of a linear frequency modulation signal are effectively improved.

Further, optionally, the first selection module is specifically configured to: select the first channel estimate as the channel estimate of the next pilot symbol if the content of the next data symbol of the next pilot symbol is different from content of the next pilot symbol; otherwise, select the second channel estimate as the channel estimate of the next pilot symbol.

Further, optionally, the first selection module is further configured to: when the current pilot symbol is the first pilot symbol, regard the second channel estimate as the channel estimate of the first pilot symbol by default.

Further, optionally, the third channel estimation apparatus for a linear frequency modulation communications system further includes a second filtering module, configured to: before the second demodulation module uses the selected channel estimate of the next pilot symbol as the channel estimate of the current pilot symbol to demodulate in advance the preceding and next data symbols of the next pilot symbol, filter the selected channel estimate of the next pilot symbol.

In some embodiments, a fourth channel estimation apparatus for a linear frequency modulation communications system is provided, including: a third channel estimation module, configured to perform channel estimation on each pilot symbol in a first channel estimation manner and a second channel estimation manner, to obtain a first channel estimate and a second channel estimate, where the first channel estimation manner is an FFT channel estimation manner, and the second channel estimation manner is a matched filtering channel estimation manner; a third demodulation module, configured to demodulate preceding and next data symbols of a next pilot symbol in advance according to a channel estimate of a current pilot symbol, to obtain content of the preceding and next data symbols of the next pilot symbol; a third delay spread estimation module, configured to estimate a delay spread or a maximum path of a channel; and a second selection module, configured to select a channel estimate of the next pilot symbol from the first channel estimate and the second channel estimate according to the content of the preceding and next data symbols of the next pilot symbol and the delay spread or the maximum path, to obtain a channel estimate of each pilot symbol. According to the apparatus, a suitable channel estimate is selected from a plurality of channel estimates according to content of the next pilot symbol, the content of the preceding and next data symbols of the next pilot symbol, and the delay spread or the maximum path, so that accuracy of the channel estimate is improved. In this way, channel estimation performance and demodulation performance of a linear frequency modulation signal are effectively improved.

Further, optionally, the second selection module is specifically configured to: when the delay spread or the maximum path is equal to or greater than a preset threshold, if the content of the preceding data symbol of the next pilot symbol is the same as content of the next pilot symbol, select the first channel estimate as the channel estimate of the next pilot symbol; otherwise, select the second channel estimate as the channel estimate of the next pilot symbol; or when the delay spread or the maximum path is less than the preset threshold, if the content of the next data symbol of the next pilot symbol is the same as the content of the next pilot symbol, select the second channel estimate as the channel estimate of the next pilot symbol; otherwise, select the first channel estimate as the channel estimate of the next pilot symbol.

Further, optionally, the second selection module is further configured to: when the current pilot symbol is the first pilot symbol, regard the second channel estimate as the channel estimate of the first pilot symbol by default.

Further, optionally, the fourth channel estimation apparatus for a linear frequency modulation communications system further includes a third filtering module, configured to: before the third demodulation module uses the selected channel estimate of the next pilot symbol as the channel estimate of the current pilot symbol to demodulate in advance the preceding and next data symbols of the next pilot symbol, filter the selected channel estimate of the next pilot symbol.

In some embodiments, a fifth channel estimation apparatus for a linear frequency modulation communications system is provided, including: a second channel estimation module, configured to perform channel estimation on each pilot symbol in a first channel estimation manner and a second channel estimation manner, to obtain a first channel estimate and a second channel estimate, where the first channel estimation manner includes either of an LS channel estimation manner and an MMSE channel estimation manner, and the second channel estimation manner includes a matched filtering channel estimation manner; a second demodulation module, configured to demodulate preceding and next data symbols of a next pilot symbol in advance according to a channel estimate of a current pilot symbol, to obtain content of the preceding and next data symbols of the next pilot symbol; a second delay spread estimation module, configured to estimate a delay spread or a maximum path of a channel; and a first selection module, configured to select a channel estimate of the next pilot symbol from the first channel estimate and the second channel estimate according to the content of the preceding and next data symbols of the next pilot symbol and the delay spread or the maximum path, to obtain a channel estimate of each pilot symbol. According to the apparatus, a suitable channel estimate is selected from a plurality of channel estimates according to content of the next pilot symbol, the content of the preceding and next data symbols, and the delay spread or the maximum path of the channel. This can further improve accuracy of the channel estimate and effectively improve channel estimation performance and demodulation performance of a linear frequency modulation signal.

Further, optionally, the first selection module is specifically configured to: when the delay spread or the maximum path is equal to or greater than a preset threshold, if the content of the preceding data symbol of the next pilot symbol is the same as content of the next pilot symbol, select the first channel estimate as the channel estimate of the next pilot symbol; otherwise, select the second channel estimate as the channel estimate of the next pilot symbol; or when the delay spread or the maximum path is less than the preset threshold, if the content of the next data symbol of the next pilot symbol is the same as the content of the next pilot symbol, select the second channel estimate as the channel estimate of the next pilot symbol; otherwise, select the first channel estimate as the channel estimate of the next pilot symbol.

Further, optionally, the first selection module is further configured to: when the current pilot symbol is the first pilot symbol, regard the second channel estimate as the channel estimate of the first pilot symbol by default.

Further, optionally, the fifth channel estimation apparatus for a linear frequency modulation communications system further includes a second filtering module, configured to: before the second demodulation module uses the selected channel estimate of the next pilot symbol as the channel estimate of the current pilot symbol to demodulate in advance the preceding and next data symbols of the next pilot symbol, filter the selected channel estimate of the next pilot symbol.

In addition, for the second, the fourth and the fifth channel estimation apparatuses for a linear frequency modulation communications system, the first delay spread estimation module, the second delay spread estimation module and the third delay spread estimation module may use a same manner to estimate a delay spread or a maximum path of the channel. The modules are specifically configured to: obtain a first delay spread or a first maximum path according to a synchronous signal; obtain a second delay spread or a second maximum path according to the pilot symbol; and estimate the delay spread of the channel according to at least one of the first delay spread and the second delay spread, or estimate the maximum path of the channel according to at least one of the first maximum path and the second maximum path.

Further, optionally, the first delay spread estimation module, the second delay spread estimation module and the third delay spread estimation module are specifically configured to: perform, if the synchronous signal is sent in an up chirp manner, pointwise multiplication on a received synchronous signal and a conjugate of the sent synchronous signal, and perform IFFT, to obtain a first power spectrum; or perform, if the synchronous signal is sent in a down chirp manner, pointwise multiplication on a received synchronous signal and a conjugate of the sent synchronous signal, and perform FFT, to obtain a second power spectrum; and obtain the first delay spread according to the first power spectrum or the second power spectrum through calculation, or obtain the first maximum path according to the first power spectrum or the second power spectrum through calculation.

Further, optionally, the first delay spread estimation module, the second delay spread estimation module and the third delay spread estimation module are specifically configured to: perform, if the pilot symbol is sent in an up chirp manner, pointwise multiplication on a received pilot symbol and a conjugate of the sent pilot symbol, and perform IFFT, to obtain a third power spectrum; or perform, if the pilot symbol is sent in a down chirp manner, pointwise multiplication on a received pilot symbol and a conjugate of the sent pilot symbol, and perform FFT, to obtain a fourth power spectrum; and obtain the second delay spread according to the third power spectrum or the fourth power spectrum through calculation, or obtain the second maximum path according to the third power spectrum or the fourth power spectrum through calculation.

Further, optionally, the first delay spread estimation module, the second delay spread estimation module and the third delay spread estimation module are specifically configured to: when estimating the delay spread of the channel according to at least one of the first delay spread and the second delay spread, filter the first delay spread to obtain the delay spread of the channel, or filter the second delay spread to obtain the delay spread of the channel, or perform weighting calculation on the filtered first delay spread and the filtered second delay spread, to obtain the delay spread of the channel.

Further, optionally, the first delay spread estimation module, the second delay spread estimation module and the third delay spread estimation module are specifically configured to: when estimating the maximum path of the channel according to at least one of the first maximum path and the second maximum path, filter the first maximum path to obtain the maximum path of the channel, or filter the second maximum path to obtain the maximum path of the channel, or perform weighting calculation on the filtered first maximum path and the filtered second maximum path, to obtain the maximum path of the channel.

In some embodiments, a linear frequency modulation communications system is provided. The system may include any of the first to the fifth channel estimation apparatuses for a linear frequency modulation communications system. The system can effectively ensure accuracy of a channel estimate and improve channel estimation performance and demodulation performance of a linear frequency modulation signal by any of the channel estimation apparatuses for a linear frequency modulation communications system.

In some embodiments, a computer-readable storage medium is provided. A channel estimation program for a linear frequency modulation communications system is stored in the computer-readable storage medium, and the channel estimation program is executed by a processor to achieve any of the first to the fifth channel estimation methods for a linear frequency modulation communications system. The storage medium can effectively ensure accuracy of a channel estimate and improve channel estimation performance and demodulation performance of a linear frequency modulation signal by performing any of the channel estimation methods for a linear frequency modulation communications system.

In some embodiments, a chip is provided. The chip includes a memory and a processor. A computer program is stored in the memory, and the computer program is executed by the processor to achieve any of the first to the fifth channel estimation methods for a linear frequency modulation communications system. The chip can effectively ensure accuracy of a channel estimate and improve channel estimation performance and demodulation performance of a linear frequency modulation signal by performing any of the channel estimation methods for a linear frequency modulation communications system.

The appended aspects and advantages of the present disclosure are described below. Some of the aspects or advantages are clear in the following description, or are known through practice of the present disclosure.

**BRIEF DESCRIPTION OF THE DRAWINGS**

FIG. 1 is a schematic diagram of sending a pilot symbol and a data symbol according to an embodiment of the present disclosure;

FIG. 2 is a flow chart of a channel estimation method for a linear frequency modulation communications system according to a first embodiment of the present disclosure;

FIG. 3 is a schematic diagram of a matched filtering channel estimation manner according to an embodiment of the present disclosure;

FIG. 4 is a schematic diagram of an FFT channel estimation manner according to an embodiment of the present disclosure;

FIG. 5 is a flow chart of a channel estimation method for a linear frequency modulation communications system according to a second embodiment of the present disclosure;

FIG. 6a is a flow chart of estimating a delay spread of a channel according to an embodiment of the present disclosure;

FIG. 6b is a flow chart of estimating a maximum path of a channel according to an embodiment of the present disclosure;

FIG. 7 is a flow chart of a channel estimation method for a linear frequency modulation communications system according to a third embodiment of the present disclosure;

FIG. 8 is a flow chart of a channel estimation method for a linear frequency modulation communications system according to a specific embodiment of the present disclosure;

FIG. 9 is a flow chart of a channel estimation method for a linear frequency modulation communications system according to a fourth embodiment of the present disclosure;

FIG. 10 is a flow chart of a channel estimation method for a linear frequency modulation communications system according to another specific embodiment of the present disclosure;

FIG. 11a is a figure comparing mean square error (MSE) performance of channel estimation of an Extended Vehicular A model (EVA) channel and that of an Extended Typical Urban model (ETU) channel during a large delay spread;

FIG. 11b is a figure comparing MSE performance of channel estimation of an Extended Pedestrian A model (EPA) channel and that of an additive white Gaussian noise (AWGN) channel during a small delay spread;

FIG. 12 is a flow chart of a channel estimation method for a linear frequency modulation communications system according to a fifth embodiment of the present disclosure;

FIG. 13 is a schematic diagram of a channel estimation apparatus for a linear frequency modulation communications system according to a first embodiment of the present disclosure;

FIG. 14 is a schematic diagram of a channel estimation apparatus for a linear frequency modulation communications system according to a second embodiment of the present disclosure;

FIG. 15 is a schematic diagram of a channel estimation apparatus for a linear frequency modulation communications system according to a third embodiment of the present disclosure;

FIG. 16 is a schematic diagram of a channel estimation apparatus for a linear frequency modulation communications system according to a fourth embodiment of the present disclosure; and

FIG. 17 is a schematic diagram of a channel estimation apparatus for a linear frequency modulation communications system according to a fifth embodiment of the present disclosure.

**DETAILED DESCRIPTION**

The embodiments of the present disclosure are described below in detail. Examples of the embodiments are shown in the accompanying drawings. The same or similar numerals represent the same or similar elements or elements having the same or similar functions throughout the specification. The embodiments described below with reference to the accompanying drawings are illustrative, which are merely intended to explain the present disclosure, rather than to limit the present disclosure.

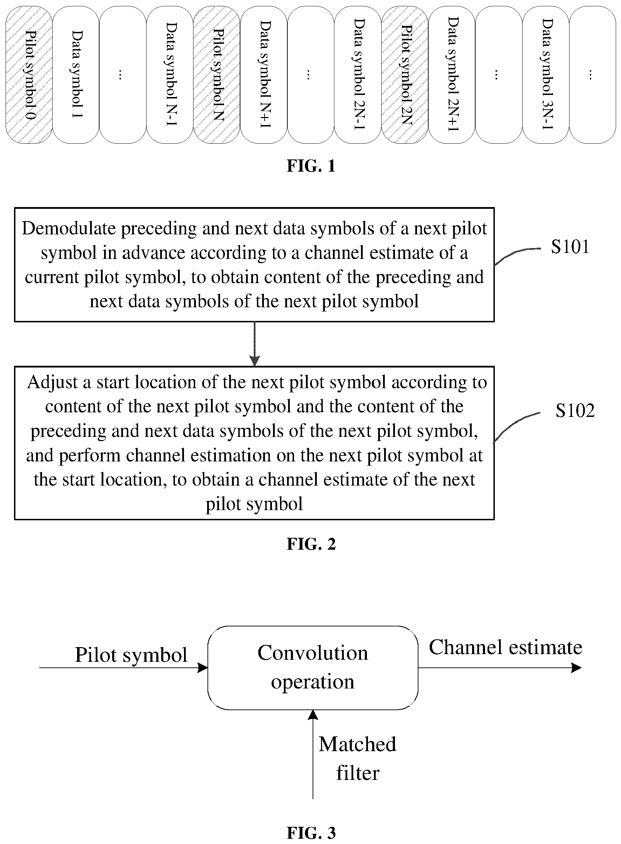

It should be noted that, in a DM system of a chirp signal, during channel estimation, a pilot symbol may be sent at a certain interval when data symbols are sent. For example, the pilot symbol and the data symbol may be sent in a manner shown in FIG. 1. Every N symbols include one pilot symbol, and N is a positive integer that may be specifically 4, 8, 16 and the like.

In an actual system, due to impact of multipath, a transmitted filter and a received filter, channel estimation on a pilot symbol may be affected by sending content of a preceding data symbol and a next data symbol. If sending content of preceding and next data symbols of a current pilot symbol is different from sending content of the pilot symbol, ISI may be caused, leading to an inaccurate channel estimate and decreased channel estimation performance. The impact of ISI is especially great for a multipath channel and a small spreading factor SF. Considering the impact of ISI on channel estimation and according to features of ISI, this application provides a linear frequency modulation communications system and a channel estimation method and apparatus therefor, a medium, and a chip that can effectively ensure accuracy of a channel estimate and improve channel estimation performance and demodulation performance of a linear frequency modulation signal. The method is specifically: demodulating preceding and next data symbols of a next pilot symbol in advance according to a channel estimate of a current pilot symbol, to obtain content of the preceding and next data symbols of the next pilot symbol, and obtaining a channel estimate of the next pilot symbol according to content of the next pilot symbol and the content of the preceding and next data symbols of the next pilot symbol, thereby improving accuracy of the channel estimate and channel estimation performance; or demodulating preceding and next data symbols of a next pilot symbol in advance according to a channel estimate of a current pilot symbol, to obtain content of the preceding and next data symbols of the next pilot symbol, estimating a delay spread or a maximum path of a channel, and obtaining a channel estimate of the next pilot symbol according to content of the next pilot symbol, the content of the preceding and next data symbols of the next pilot symbol, and the delay spread or the maximum path of the channel, to further improve accuracy of the channel estimate and channel estimation performance.

First, the channel estimation method for a linear frequency modulation communications system in this application is described in detail below with reference to the accompany drawings.

For a first embodiment of the channel estimation method:

Refer to FIG. 2, the channel estimation method for a linear frequency modulation communications system may include the following steps:

Step S101. Demodulate preceding and next data symbols of a next pilot symbol in advance according to a channel estimate of a current pilot symbol, to obtain content of the preceding and next data symbols of the next pilot symbol.

Specifically, supposing that the current pilot symbol is a first pilot symbol, for example, a pilot symbol 0 shown in FIG. 1, sending content of all symbols 1 to N+1 may be estimated according to a channel estimate of the pilot symbol 0, to obtain content of the pilot symbol N, the data symbol N-1 and the data symbol N+1 in advance through demodulation. When the pilot symbol is not the first pilot symbol, for example, is the pilot symbol N shown in FIG. 1, sending content of all symbols N+2 to 2N+1 may be estimated according to a channel estimate of the pilot symbol N, to obtain content of the pilot symbol 2N, the data symbol 2N-1 and the data symbol 2N+1 in advance through demodulation. The rest can be deduced by analog.

Optionally, in some embodiments, before the demodulating preceding and next data symbols of a next pilot symbol in advance according to a channel estimate of a current pilot symbol, to obtain content of the preceding and next data symbols of the next pilot symbol, the method further includes filtering the channel estimate of the current pilot symbol. That is, after the channel estimate of the current pilot symbol is obtained, the channel estimate of the current pilot symbol is filtered first, and then the preceding and next data symbols of the next pilot symbol is demodulated in advance according to the filtered channel estimate of the current pilot symbol, to obtain the content of the preceding and next data symbols of the next pilot symbol. In this way, the channel estimation performance and the demodulation performance are further improved. The channel estimate may be filtered by an existing technology, and filtering methods are not listed one by one herein. It should be noted that, when the pilot symbol is the first pilot symbol, the pilot symbol may be used as a channel estimate of the first pilot symbol and does not need to be filtered.

Step S 102. Adjust a start location of the next pilot symbol according to content of the next pilot symbol and the content of the preceding and next data symbols of the next pilot symbol, and perform channel estimation on the next pilot symbol at the start location, to obtain a channel estimate of the next pilot symbol.

That is, by adjusting the start location of the next pilot symbol according to the relationship between the content of the next pilot symbol and the content of the preceding and next data symbols of the next pilot symbol, accuracy of the channel estimate may be improved, thereby improving channel estimation performance and demodulation performance of a linear frequency modulation signal.

Optionally, in some embodiments, the adjusting a start location of the next pilot symbol according to content of the next pilot symbol and the content of the preceding and next data symbols of the next pilot symbol, and performing channel estimation on the next pilot symbol at the start location, to obtain a channel estimate of the next pilot symbol includes: if the content of the next data symbol of the next pilot symbol is different from the content of the next pilot symbol, adjusting the start location of the next pilot symbol to a first location, and performing channel estimation on the next pilot symbol at the first location, to obtain the channel estimate of the next pilot symbol; otherwise, adjusting the start location of the next pilot symbol to a second location, and performing channel estimation on the next pilot symbol at the second location, to obtain the channel estimate of the next pilot symbol, where the first location is ahead of the second location.

Specifically, supposing that the current pilot symbol is the first pilot symbol, for example, the pilot symbol 0 shown in FIG. 1, content of the pilot symbol N, the data symbol N-1 and the data symbol N+1 may be estimated according to a channel estimate of the pilot symbol 0. If the content of the next data symbol N+1 of the pilot symbol N is different from the content of the pilot symbol N, a start location of the pilot symbol N may be adjusted to the first location, and channel estimation is performed on the pilot symbol N at the first location, to obtain a channel estimate of the pilot symbol N; otherwise, the start location of the pilot symbol N is adjusted to the second location, and channel estimation is performed on the pilot symbol N at the second location, to obtain the channel estimate of the pilot symbol N. When the pilot symbol is not the first pilot symbol, for example, is the pilot symbol N shown in FIG. 1, content of the pilot symbol 2N, the data symbol 2N-1 and the data symbol 2N+1 may be estimated according to the channel estimate of the pilot symbol N. If the content of the next data symbol 2N+1 of the pilot symbol 2N is different from the content of the pilot symbol 2N, a start location of the pilot symbol 2N may be adjusted to the first location, and channel estimation is performed on the pilot symbol 2N at the first location, to obtain a channel estimate of the pilot symbol 2N; otherwise, the start location of the pilot symbol 2N is adjusted to the second location, and channel estimation is performed on the pilot symbol 2N at the second location, to obtain the channel estimate of the pilot symbol 2N. The channel estimate of each pilot symbol can be obtained by analog. In short, channel estimation may be performed by adjusting the start location of the pilot symbol according to the content of the pilot symbol and the content of the preceding and next data symbols of the pilot symbol, as shown in Table 1, to obtain the channel estimate of each pilot symbol.

Table 1

| Seque nce | A relationship between the content of a pilot symbol and the content of a preceding data symbol of the pilot symbol | A relationship between the content of a pilot symbol and the content of a next data symbol of the pilot symbol | A start location of channel estimation on a pilot symbol |
|---|---|---|---|
| 1 | Same | Same | Second location or first location |
| 2 | Same | Different | First location |
| 3 | Different | Same | Second location |
| 4 | Different | Different | First location |

For a transmitted chirp signal, an autocorrelation is 1, and a cross correlation is 0. Therefore, when the sending content of the preceding data symbol is the same as the sending content of the current pilot symbol, time offset may be moved forward, that is, to adjust the start location of the pilot symbol to the first location, so that no ISI exists during channel estimation. When the sending content of the next data symbol is the same as the sending content the current pilot symbol, time offset may be moved backward, that is, to adjust the start location of the pilot symbol to the second location, so that no ISI exists during channel estimation. When the sending content of the preceding data symbol is different from the sending content of the current pilot symbol and the sending content of the next data symbol is different from the sending content of the current pilot symbol, time offset may be moved forward, that is, to adjust the start location of the pilot symbol to the first location, so that ISI during channel estimation is significantly reduced. Based on the above, by adjusting the start location of the pilot symbol according to the content of the pilot symbol and the content of the preceding and next data symbols of the pilot symbol, channel estimation accuracy can be effectively improved. It should be noted that, when both the content of the preceding and next data symbols of the pilot symbol is the same as the content of the pilot symbol, as the first case shown in Table 1, the start location of the pilot symbol may be adjusted to the first location or the second location, and there is little difference between accuracy of obtained channel estimates.

It should be noted that, in this embodiment, channel estimation may be performed on the next pilot symbol at the start location in any of an FFT channel estimation manner, a matched filtering channel estimation manner, an LS channel estimation manner and an MMSE channel estimation manner, to obtain the channel estimate of the next pilot symbol. That is, when channel estimation is performed by adjusting a start location of a pilot symbol, any of the FFT channel estimation manner, the matched filtering channel estimation manner, the LS channel estimation manner and the MMSE channel estimation manner may be used to perform channel estimation on the pilot symbol, to obtain a channel estimate.

When the matched filtering channel estimation manner is used to perform channel estimation on a pilot symbol, an estimation manner shown in FIG. 3 may be used. That is, convolution operation is performed on a received pilot symbol and a matched filter, to obtain a matched filtering channel estimate of the pilot symbol. The matched filter is a conjugate of a sent pilot symbol, that is, a conjugate of an up-chirp signal.

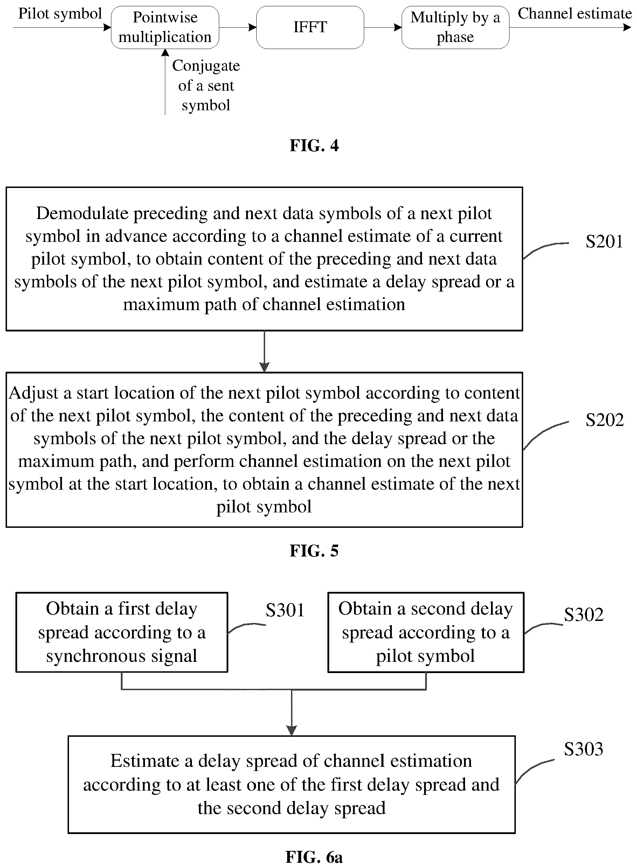

When the FFT channel estimation manner is used to perform channel estimation on a pilot symbol, an estimation manner shown in FIG. 4 may be used. That is, a received pilot symbol is multiplied by a conjugate of a sent pilot symbol first, and then inverse fast Fourier transform (IFFT) is performed, and next a transformation result is multiplied by a rotation phase, to obtain an FFT channel estimate of the pilot symbol. The rotation phase may be obtained according to an initial phase of the pilot symbol and a multipath index, and may be specifically obtained by the formula $e^{j\frac{-2\pi(n^2-2Kn)}{2^{SF+1}}}$ through calculation. In the formula, K represents an index corresponding to the initial phase of the pilot symbol, that is, an initial phase of a chirp signal, n represents a multipath index, and SF represents a spreading factor.

When the LS channel estimation manner is used to perform channel estimation on a pilot symbol, according to the LS norm, the following objective function is included:

$$J = \left(R - A\hat{H}\right)^{H}\left(R - A\hat{H}\right) \quad (1)$$

R represents a receiving signal vector of a pilot symbol, and $R=(r_0,r_1,...,r_{N-1})^T$, where $r_i$ represents an $i^{th}$ receiving signal sampling value in a pilot symbol. $\hat{H}$ represents an LS channel estimate. H represents an ideal channel estimate. A represents a matrix formed by sent signals, for example, a matrix formed by transmitted chirp signals. If a sending signal

$$A = \begin{bmatrix} s_0 & s_1 & \cdots & s_{N-1} \\ s_{N-1} & s_0 & \cdots & s_{N-2} \\ \cdots & \cdots & \cdots & \cdots \\ s_1 & s_2 & \cdots & s_0 \end{bmatrix}$$

vector is $(s_0,s_1,...,s_{N-1})^T$, then .

The LS channel estimation is to solve the formula (1) to obtain a minimum $\hat{H}$ of J, and finally obtain the LS channel estimate $\hat{H} = \left(A^T A\right)^{-1} A^* * R = \left(A^T A\right)^{-1} A^* * \left(AH + N\right)$, where $N=2^{SF}$, and SF represents a spreading factor.

When the MMSE channel estimation manner is used to perform channel estimation on a pilot symbol, according to the MMSE norm, the following objective function is included:

$$J = \left|H\text{-}\hat{H}\right|^2 \quad (2)$$

H represents an MMSE channel estimate, and H represents an ideal channel estimate.

The MMSE channel estimate $\hat{H} = \left[A^T A + \sigma^2\right]^{-1}$ (AR) may be derived from the formula (2). Description of R and A is the same as that in the LS channel estimation, and σ represents noise power.

In this embodiment, the start location of the next pilot symbol is adjusted according to the content of the next pilot symbol and the content of the preceding and next data symbols, and channel estimation is performed according to the adjusted start location, so that accuracy of the channel estimate can be effectively improved. In this way, channel estimation performance and demodulation performance of a linear frequency modulation signal can be effectively improved.

For a second embodiment of the channel estimation method:

Refer to FIG. 5, the channel estimation method for a linear frequency modulation communications system may include the following steps:

Step S201. Demodulate preceding and next data symbols of a next pilot symbol in advance according to a channel estimate of a current pilot symbol, to obtain content of the preceding and next data symbols of the next pilot symbol, and estimate a delay spread or a maximum path of a channel.

It should be noted that, for description of the demodulating preceding and next data symbols of a next pilot symbol in advance according to a channel estimate of a current pilot symbol, to obtain content of the preceding and next data symbols of the next pilot symbol in step S201, please refer to relevant description in step S101, and details are not described herein again.

Further, optionally, before the demodulating preceding and next data symbols of a next pilot symbol in advance according to a channel estimate of a current pilot symbol, to obtain content of the preceding and next data symbols of the next pilot symbol, the method further includes filtering the channel estimate of the current pilot symbol. Please refer to relevant description instep S101, and details are not described herein again.

How to estimate a delay spread or a maximum path of the channel is mainly described herein. It should be noted that, estimation of a delay spread or a maximum path may be performed at an interval of a preset number (for example, 1, 2 and the like) of pilot symbols.

Optionally, in some embodiments, refer to FIG. 6a, the estimating a delay spread of a channel may include: Step S301. Obtain a first delay spread according to a synchronous signal.

It should be noted that, the synchronous signal refers to that a plurality of signal sources are given by a same carrier at one time, to provide machines that need to deal with information synchronously with signals to be referred to at a same time, so that receivers can receive more or better information. In this application, the synchronous signal is located ahead of the pilot symbol 0 shown in FIG. 1, and there is usually more than one symbol.

Optionally, in some embodiments, the obtaining a first delay spread according to a synchronous signal includes: performing, if the synchronous signal is sent in an up chirp manner, pointwise multiplication on a received synchronous signal and a conjugate of the sent synchronous signal, and performing IFFT, to obtain a first power spectrum; or performing, if the synchronous signal is sent in a down chirp manner, pointwise multiplication on a received synchronous signal and a conjugate of the sent synchronous signal, and performing FFT, to obtain a second power spectrum; and obtaining the first delay spread according to the first power spectrum or the second power spectrum through calculation.

Specifically, the first delay spread Trms1 may be obtained in different calculation manners according to different sending manners of the synchronous signal. When the synchronous signal is sent in an up chirp manner, pointwise multiplication is performed on a received synchronous signal and a conjugate of the sent synchronous signal, and IFFT is performed, to obtain a square of each sampling point, and then obtain the first power spectrum. Then, the first power spectrum is substituted into the formula (3) to obtain the first delay spread Trms1. When the synchronous signal is sent in a down chirp manner, pointwise multiplication is performed on a received synchronous signal and a conjugate of the sent synchronous signal, and FFT is performed, to obtain a square of each sampling point, and then obtain the second power spectrum. Then, the second power spectrum is substituted into the formula (3) to obtain the first delay spread Trms1. The formula is specifically as follows:

$$T_{rms1} = \sqrt{\frac{\sum_l^{L-1} P_l \tau_l^2}{\sum_l^{L-1} P_l} - \left(\frac{\sum_l^{L-1} P_l \tau_l}{\sum_l^{L-1} P_l}\right)^2} \quad (3)$$

$P_l$ is power of a 1$^{st}$ path in the power spectrum, and $\tau_l$ is a delay of the 1$^{st}$ path in the power spectrum.

Step S302. Obtain a second delay spread according to the pilot symbol.

Optionally, in some embodiments, the obtaining a second delay spread according to the pilot symbol includes: performing, if the pilot symbol is sent in an up chirp manner, pointwise multiplication on a received pilot symbol and a conjugate of the sent pilot symbol, and performing IFFT, to obtain a third power spectrum; or performing, if the pilot symbol is sent in a down chirp manner, pointwise multiplication on a received pilot symbol and a conjugate of the sent pilot symbol, and performing FFT, to obtain a fourth power spectrum; and obtaining the second delay spread according to the third power spectrum or the fourth power spectrum through calculation.

Specifically, the second delay spread Trms2 may be obtained in different calculation manners according to different sending manners of the pilot symbol. When the pilot symbol is sent in an up chirp manner, pointwise multiplication is performed on a received pilot symbol and a conjugate of the sent pilot symbol, and IFFT is performed, to obtain a square of each sampling point, and then obtain the third power spectrum. Then, the third power spectrum is substituted into the formula (4) to obtain the second delay spread Trms2. When the pilot symbol is sent in a down chirp manner, pointwise multiplication is performed on a received pilot symbol and a conjugate of the sent pilot symbol, and FFT is performed, to obtain a square of each sampling point, and then obtain the fourth power spectrum. Then, the fourth power spectrum is substituted into the formula (4) to obtain the second delay spread Trms2. The formula is specifically as follows:

$$T_{rms2} = \sqrt{\frac{\sum_m^{M-1} P_m \tau_m^2}{\sum_m^{M-1} P_m} - \left(\frac{\sum_m^{M-1} P_m \tau_m}{\sum_m^{M-1} P_m}\right)^2} \quad (4)$$

$P_m$ is power of an $m^{th}$ path in the power spectrum, and $\tau_m$ is a delay of the $m^{th}$ path in the power spectrum.

Step S303. Estimate the delay spread of the channel according to at least one of the first delay spread and the second delay spread.

That is, the delay spread of the channel may be estimated according to the first delay spread, or the delay spread of the channel may be estimated according to the second delay spread, or the delay spread of the channel may be estimated according to the first delay spread and the second delay spread.

Optionally, in some embodiments, the estimating the delay spread of the channel according to at least one of the first delay spread and the second delay spread includes: filtering the first delay spread to obtain the delay spread of the channel, or filtering the second delay spread to obtain the delay spread of the channel, or performing weighting calculation on the filtered first delay spread and the filtered second delay spread, to obtain the delay spread of the channel.

Specifically, a value $T_{rms1}'$ obtained after the first delay spread is filtered may be used as the delay spread of the channel; or a value $T_{rms2}'$ obtained after the second delay spread is filtered may be used as the delay spread of the channel; or weighted summation is performed on the value $T_{rms1}'$ obtained after the first delay spread is filtered and the value $T_{rms2}'$ obtained after the second delay spread is filtered, and then an obtained value is used as the delay spread of the channel. For example, a weight corresponding to the first delay spread may be set as $\alpha$, and a weight corresponding to the second delay spread may be set to 1-$\alpha$, and then the delay spread of the channel is obtained through calculation according to the value $T_{rms1}'$ obtained after the first delay spread is filtered, the weight $\alpha$ corresponding to the first delay spread, the value $T_{rms2}'$ obtained after the second delay spread is filtered, and the weight 1-$\alpha$ corresponding to the second delay spread. The formula is specifically as follows:

$$T_{rms} = T_{rms1}' \times \alpha + T_{rms2}' \times \left(1 - \alpha\right) \quad (5)$$

Based on the above, a relatively accurate delay spread of the channel may be obtained according to the first delay spread obtained according to the synchronous signal and/or according to the second delay spread obtained according to the pilot symbol, thereby further improving channel estimation accuracy.

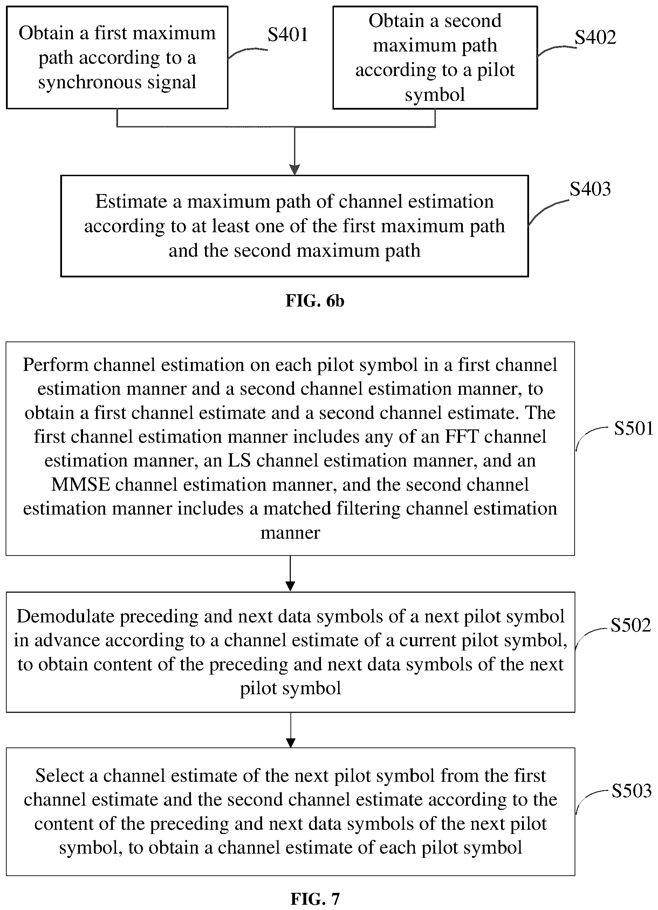

Optionally, in some embodiments, refer to FIG. 6b, the estimating a maximum path of a channel may include: Step S401. Obtain a first maximum path according to a synchronous signal.

Optionally, in some embodiments, the obtaining a first maximum path according to a synchronous signal includes: performing, if the synchronous signal is sent in an up chirp manner, pointwise multiplication on a received synchronous signal and a conjugate of the sent synchronous signal, and performing IFFT, to obtain a first power spectrum; or performing, if the synchronous signal is sent in a down chirp manner, pointwise multiplication on a received synchronous signal and a conjugate of the sent synchronous signal, and performing FFT, to obtain a second power spectrum; and obtaining the first maximum path according to the first power spectrum or the second power spectrum through calculation.

Specifically, the first maximum pathTmax1 may be obtained in different calculation manners according to different sending manners of the synchronous signal. When the synchronous signal is sent in an up chirp manner, pointwise multiplication is performed on a received synchronous signal and a conjugate of the sent synchronous signal, and IFFT is performed, to obtain a square of each sampling point, and then obtain the first power spectrum. Then, the first maximum pathTmax1 is obtained according to the first power spectrum. Or, when the synchronous signal is sent in a down chirp manner, pointwise multiplication is performed on a received synchronous signal and a conjugate of the sent synchronous signal, and FFT is performed, to obtain a square of each sampling point, and then obtain the second power spectrum. Then, the first maximum pathTmax1 is obtained according to the second power spectrum. This is specifically as follows: obtaining maximum path power MaxPower and Noise (an average of power of some sampling points in the power spectrum, and a location of each sampling point may be set according to a supported maximum delay) in the power spectrum, and selecting a path greater than max (MaxPower*Threshold 1, Noise*Threshold2). The maximum path is marked as Tmax1, and Threshold1 and Threshold2 are respectively a maximum path threshold and a noise threshold that may be set according to an actual requirement.

Step S402. Obtain a second maximum path according to the pilot symbol.

Optionally, in some embodiments, the obtaining a second maximum path according to the pilot symbol includes: performing, if the pilot symbol is sent in an up chirp manner, pointwise multiplication on a received pilot symbol and a conjugate of the sent pilot symbol, and performing IFFT, to obtain a third power spectrum; or performing, if the pilot symbol is sent in a down chirp manner, pointwise multiplication on a received pilot symbol and a conjugate of the sent pilot symbol, and performing FFT, to obtain a fourth power spectrum; and obtaining the second maximum path according to the third power spectrum or the fourth power spectrum through calculation.

Specifically, the second maximum pathTmax2 may be obtained in different calculation manners according to different sending manners of the pilot symbol. When the pilot symbol is sent in an up chirp manner, pointwise multiplication is performed on a received pilot symbol and a conjugate of the sent pilot symbol, and IFFT is performed, to obtain a square of each sampling point, and then obtain the third power spectrum. Then, the second maximum pathTmax2 is obtained according to the third power spectrum. Or, when the pilot symbol is sent in a down chirp manner, pointwise multiplication is performed on a received pilot symbol and a conjugate of the sent pilot symbol, and FFT is performed, to obtain a square of each sampling point, and then obtain the fourth power spectrum. Then, the second maximum pathTmax2 is obtained according to the fourth power spectrum. This is specifically as follows: obtaining maximum path power MaxPower and Noise (an average of power of some sampling points in the power spectrum, and a location of each sampling point may be set according to a supported maximum delay) in the power spectrum, and selecting a path greater than max (MaxPower*Threshold1, Noise*Threshold2). The mum path is marked as Tmax2, and Threshold1 and Threshold2 are respectively a maximum path threshold and a noise threshold that may be set according to an actual requirement.

Step S403. Estimate the maximum path of a channel according to at least one of the first maximum path and the second maximum path.

That is, the maximum path of the channel may be estimated according to the first maximum path, or the maximum path of the channel may be estimated according to the second maximum path, or the maximum path of the channel may be estimated according to the first maximum path and the second maximum path.

Optionally, in some embodiments, the estimating the maximum path of the channel according to at least one of the first maximum path and the second maximum path includes: filtering the first maximum path to obtain the maximum path of the channel, or filtering the second maximum path to obtain the maximum path of the channel, or performing weighting calculation on the filtered first maximum path and the filtered second maximum path, to obtain the maximum path of the channel. A specific obtaining process is the same as that in step S303, and details are not described herein again.

Based on the above, a relatively accurate maximum path of the channel may be obtained according to the first maximum path obtained according to the synchronous signal and/or the second maximum path obtained according to the pilot symbol, thereby further improving channel estimation accuracy.

Step S202. Adjust a start location of the next pilot symbol according to content of the next pilot symbol, the content of the preceding and next data symbols of the next pilot symbol, and the delay spread or the maximum path, and perform channel estimation on the next pilot symbol at the start location, to obtain a channel estimate of the next pilot symbol.

That is, in this application, the channel estimate of the next pilot symbol may be obtained according to the content of the next pilot symbol, the content of the preceding and next data symbols of the next pilot symbol, and the delay spread. Or, the channel estimate of the next pilot symbol may be obtained according to the content of the next pilot symbol, the content of the preceding and next data symbols of the next pilot symbol, and the maximum path. During actual application, either of the delay spread and the maximum path may be used.

Optionally, in some embodiments, the adjusting a start location of the next pilot symbol according to content of the next pilot symbol, the content of the preceding and next data symbols of the next pilot symbol, and the delay spread or the maximum path, and performing channel estimation on the next pilot symbol at the start location, to obtain a channel estimate of the next pilot symbol includes: when the delay spread or the maximum path is less than a preset threshold, if the content of the next data symbol of the next pilot symbol is the same as the content of the next pilot symbol, adjusting the start location of the next pilot symbol to a second location, and performing channel estimation on the next pilot symbol at the second location, to obtain the channel estimate of the next pilot symbol; otherwise, adjusting the start location of the next pilot symbol to a first location, and performing channel estimation on the next pilot symbol at the first location, to obtain the channel estimate of the next pilot symbol, where the first location is ahead of the second location; or when the delay spread or the maximum path is equal to or greater than the preset threshold, if the content of the preceding data symbol of the next pilot symbol is the same as the content of the next pilot symbol, adjusting the start location of the next pilot symbol to the first location, and performing channel estimation on the next pilot symbol at the first location, to obtain the channel estimate of the next pilot symbol; otherwise, adjusting the start location of the next pilot symbol to the second location, and performing channel estimation on the next pilot symbol at the second location, to obtain the channel estimate of the next pilot symbol.

Specifically, supposing that the current pilot symbol is the first pilot symbol, for example, the pilot symbol 0 shown in FIG. 1, when a delay spread (or maximum path) obtained at the pilot symbol N is less than the preset threshold, for example, 0.25 μs, if content of the next data symbol N+1 of the pilot symbol N is the same as content of the pilot symbol N, a start location of the pilot symbol N is adjusted to the second location, and channel estimation is performed on the pilot symbol N at the second location, to obtain a channel estimate of the pilot symbol N. Otherwise, the start location of the pilot symbol N is adjusted to the first location, and channel estimation is performed on the pilot symbol N at the first location, to obtain the channel estimate of the pilot symbol N. When the delay spread (or the maximum path) obtained at the pilot symbol N is equal to or greater than the preset threshold, for example, 0.25 μs, if content of the preceding data symbol N-1 of the pilot symbol N is the same as the content of the pilot symbol N, the start location of the pilot symbol N is adjusted to the first location, and channel estimation is performed on the pilot symbol N at the first location, to obtain the channel estimate of the pilot symbol N. Otherwise, the start location of the pilot symbol N is adjusted to the second location, and channel estimation is performed on t the pilot symbol N at the second location, to obtain the channel estimate of the pilot symbol N.

Similarly, if the pilot symbol is not the first pilot symbol, for example, is the pilot symbol N shown in FIG. 1, when a delay spread (or maximum path) obtained at the pilot symbol 2N is less than the preset threshold, for example, 0.25 $\mu$s, if content of the next data symbol 2N+1 of the pilot symbol 2N is the same as content of the pilot symbol 2N, a start location of the pilot symbol 2N is adjusted to the second location, and channel estimation is performed on the pilot symbol 2N at the second location, to obtain a channel estimate of the pilot symbol 2N. Otherwise, the start location of the pilot symbol 2N is adjusted to the first location, and channel estimation is performed on the pilot symbol 2N at the first location, to obtain the channel estimate of the pilot symbol 2N. When the delay spread (or the maximum path) obtained at the pilot symbol 2N is equal to or greater than the preset threshold, for example, 0.25 $\mu$s, if content of the preceding data symbol 2N-1 of the pilot symbol N is the same as the content of the pilot symbol 2N, the start location of the pilot symbol 2N is adjusted to the first location, and channel estimation is performed on the pilot symbol 2N at the first location, to obtain the channel estimate of the pilot symbol 2N. Otherwise, the start location of the pilot symbol 2N is adjusted to the second location, and channel estimation is performed on the pilot symbol 2N at the second location, to obtain the channel estimate of the pilot symbol 2N.

The channel estimate of each pilot symbol can be obtained by analog. In short, channel estimation may be performed by adjusting the start location of the pilot symbol according to the content of the pilot symbol, the content of the preceding and next data symbols of the pilot symbol, and the delay spread or the maximum path, as shown in Table 2, to obtain the channel estimate of each pilot symbol.

Table 2

| Sequence | A relationship between content of a pilot symbol and content of a preceding data symbol of the pilot symbol | A relationship between content of a pilot symbol and content of a next data symbol of the pilot symbol | A start location of channel estimation on a pilot symbol when a delay spread or a maximum path is equal to or greater than a preset threshold | A start location of channel estimation on a pilot symbol when a delay spread or a maximum path is less than a preset threshold |
|---|---|---|---|---|
| 1 | Same | Same | First location or second location | Second location or first location |
| 2 | Same | Different | First location | First location |
| 3 | Different | Same | Second location | Second location |
| 4 | Different | Different | Second location | First location |

It should be noted that, when both the content of the preceding and next data symbols of the pilot symbol is the same as the content of the pilot symbol, as the first case shown in Table 2, whatever the delay spread or the maximum path is, the start location of the pilot symbol may be adjusted to the first location or the second location, and there is little difference between accuracy of obtained channel estimates.

In addition, it should be noted that, in this embodiment, channel estimation may be performed on the next pilot symbol at the start location in any of an FFT channel estimation manner, a matched filtering channel estimation manner, an LS channel estimation manner and an MMSE channel estimation manner, to obtain the channel estimate of the next pilot symbol. That is, when channel estimation is performed by adjusting a start location of a pilot symbol, any of the FFT channel estimation manner, the matched filtering channel estimation manner, the LS channel estimation manner and the MMSE channel estimation manner may be used to perform channel estimation on the pilot symbol, to obtain a channel estimate.

In this embodiment, the start location of the next pilot symbol is adjusted according to the content of the next pilot symbol, the content of the preceding and next data symbols, and the delay spread or the maximum path of the channel, and channel estimation is performed according to the adjusted start location. This can further improve accuracy of the channel estimate and effectively improve channel estimation performance and demodulation performance of a linear frequency modulation signal.

For a third embodiment of the channel estimation method:

Refer to FIG. 7, the channel estimation method for a linear frequency modulation communications system may include the following steps:

Step S501. Perform channel estimation on each pilot symbol in a first channel estimation manner and a second channel estimation manner, to obtain a first channel estimate and a second channel estimate. The first channel estimation manner includes any of an FFT channel estimation manner, an LS channel estimation manner, and an MMSE channel estimation manner, and the second channel estimation manner includes a matched filtering channel estimation manner.

Specifically, channel estimation may be performed on the pilot symbol 0, the pilot symbol N, the pilot symbol 2N and the like shown in FIG. 1 in the first channel estimation manner (for example, the FFT channel estimation manner, the LS channel estimation manner, or the MMSE channel estimation manner), to obtain a first channel estimate of each pilot symbol (for example, an FFT channel estimate, an LS channel estimate or an MMSE channel estimate). In addition, channel estimation may be performed on the pilot symbol 0, the pilot symbol N, the pilot symbol 2N and the like shown in FIG. 1 in the second channel estimation manner (for example, the matched filtering channel estimation manner), to obtain a second channel estimate of each pilot symbol (for example, a matched filtering channel estimate). Description of the channel estimation manner is the same as above, and details are not described herein again.

Step S502. Demodulate preceding and next data symbols of a next pilot symbol in advance according to a channel estimate of a current pilot symbol, to obtain content of the preceding and next data symbols of the next pilot symbol.

Specifically, supposing that the current pilot symbol is the first pilot symbol, for example, a pilot symbol 0 shown in FIG. 1, sending content of all symbols 1 to N+1 may be estimated according to a channel estimate of the pilot symbol 0, to obtain content of the pilot symbol N, the data symbol N-1 and the data symbol N+1 in advance through demodulation. When the pilot symbol is not the first pilot symbol, for example, is the pilot symbol N shown in FIG. 1, sending content of all symbols N+2 to 2N+1 may be estimated according to a channel estimate of the pilot symbol N, to obtain content of the pilot symbol 2N, the data symbol 2N-1 and the data symbol 2N+1 in advance through demodulation. The rest can be deduced by analog.

Optionally, in some embodiments, before selecting the channel estimate of the next pilot symbol as the channel estimate of the current pilot symbol to demodulate in advance the preceding and next data symbols of the next pilot symbol, the method further includes filtering the selected channel estimate of the next pilot symbol. That is, after the channel estimate of the current pilot symbol is obtained, the channel estimate of the current pilot symbol is filtered first, and then the preceding and next data symbols of the next pilot symbol is demodulated in advance according to the filtered channel estimate of the current pilot symbol, to obtain the content of the preceding and next data symbols of the next pilot symbol. In this way, the channel estimation performance and the demodulation performance are further improved.

Step S503. Select a channel estimate of the next pilot symbol from the first channel estimate and the second channel estimate according to the content of the preceding and next data symbols of the next pilot symbol, to obtain a channel estimate of each pilot symbol.

That is, a more suitable channel estimate may be selected from the first channel estimate and the second channel estimate according to the content of the next pilot symbol and the content of the preceding and next data symbols of the next pilot symbol and used as the channel estimate of the next pilot symbol, to improve accuracy of the channel estimate, and improve channel estimation performance and demodulation performance of a linear frequency modulation signal.

Specifically, supposing that the current pilot symbol is the first pilot symbol, for example, the pilot symbol 0 shown in FIG. 1, after the content of the pilot symbol N, the data symbol N-1 and the data symbol N+1 is estimated according to the channel estimate of the pilot symbol 0, the channel estimate of the pilot symbol N may be determined from the first channel estimate (for example, the FFT channel estimate, the LS channel estimate or the MMSE channel estimate) and the second channel estimate (for example, the matched filtering channel estimate) of the pilot symbol N according to the content of the pilot symbol N, the data symbol N-1 and the data symbol N+1. When the pilot symbol is not the first pilot symbol, for example, is the pilot symbol N shown in FIG. 1, after the content of the pilot symbol 2N, the data symbol 2N-1 and the data symbol 2N+1 is estimated according to the channel estimate of the pilot symbol N, the channel estimate of the pilot symbol 2N may be determined from the first channel estimate (for example, the FFT channel estimate, the LS channel estimate or the MMSE channel estimate) and the second channel estimate (for example, the matched filtering channel estimate) of the pilot symbol 2N according to the content of the pilot symbol 2N, the data symbol 2N-1 and the data symbol 2N+1. The rest can be deduced by analog, until a channel estimate of each pilot symbol is obtained.

Optionally, in some embodiments, the selecting a channel estimate of the next pilot symbol from the first channel estimate and the second channel estimate according to the content of the preceding and next data symbols of the next pilot symbol includes: selecting the first channel estimate as the channel estimate of the next pilot symbol if the content of the next data symbol of the next pilot symbol is different from content of the next pilot symbol; otherwise, selecting the second channel estimate as the channel estimate of the next pilot symbol.

Specifically, supposing that the current pilot symbol is the first pilot symbol, for example, a pilot symbol 0 shown in FIG. 1, content of the pilot symbol N, the data symbol N-1 and the data symbol N+1 may be estimated according to the channel estimate of the pilot symbol 0. If the content of the next data symbol N+1 of the pilot symbol N is different from the content of the pilot symbol N, the channel estimate of the pilot symbol N is an estimate obtained by performing channel estimation in the first channel estimation manner, that is, the first channel estimate (for example, the FFT channel estimate, the LS channel estimate or the MMSE channel estimate). Otherwise, the channel estimate of the pilot symbol N is an estimate obtained by performing channel estimation in the second channel estimation manner, that is, the second channel estimate (for example, the matched filtering channel estimate). When the pilot symbol is not the first pilot symbol, for example, is the pilot symbol N shown in FIG. 1, content of the pilot symbol 2N, the data symbol 2N-1 and the data symbol 2N+1 may be estimated according to the channel estimate of the pilot symbol N. If the content of the next data symbol 2N+1 of the pilot symbol 2N is different from the content of the pilot symbol 2N, the channel estimate of the pilot symbol 2N is an estimate obtained by performing channel estimation in the first channel estimation manner, that is, the first channel estimate (for example, the FFT channel estimate, the LS channel estimate or the MMSE channel estimate). Otherwise, the channel estimate of the pilot symbol 2N is an estimate obtained by performing channel estimation in the second channel estimation manner, that is, the second channel estimate (for example, the matched filtering channel estimate). The channel estimate of each pilot symbol can be obtained by analog. In short, channel estimation may be performed in any of the manners in Table 3 according to the content of the pilot symbol and the content of the preceding and next data symbols of the pilot symbol, to obtain the channel estimate of each pilot symbol.

Table 3

| Sequence | A relationship between content of a pilot symbol and content of a preceding data symbol of the pilot symbol | A relationship between content of a pilot symbol and content of a next data symbol of the pilot symbol | A channel estimation manner of a pilot symbol |
|---|---|---|---|
| 1 | Same | Same | Second channel estimation manner or first channel estimation manner |
| 2 | Same | Different | First channel estimation manner |
| 3 | Different | Same | Second channel estimation manner |
| 4 | Different | Different | First channel estimation manner |

It should be noted that, in Table 3, the first channel estimation manner is an FFT channel estimation manner, an LS channel estimation manner or an MMSE channel estimation manner, and the second channel estimation manner is a matched filtering channel estimation manner.

In addition, it should be noted that, when the current pilot symbol is the first pilot symbol, for example, the pilot symbol 0 shown in FIG. 1, the second channel estimate (for example, the matched filtering channel estimate) may be regarded as a channel estimate of the first pilot symbol by default. In addition, when both the content of the preceding and next data symbols of the pilot symbol is the same as the content of the pilot symbol, as the first case shown in Table 3, whatever the delay spread or the maximum path is, the channel estimate of the pilot symbol may be obtained in the first channel estimation manner or the second channel estimation manner, and there is little difference between accuracy of obtained channel estimates.

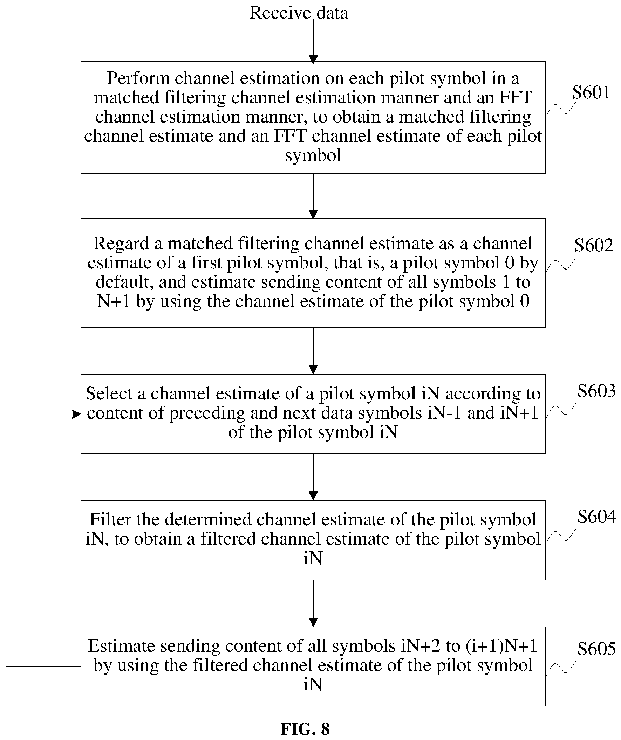

In a specific example, refer to FIG. 8, the channel estimation method for a linear frequency modulation communications system may include:

Step S601. Perform channel estimation on each pilot symbol in the matched filtering channel estimation manner and the FFT channel estimation manner, to obtain a matched filtering channel estimate and an FFT channel estimate of each pilot symbol, respectively marked as $\widehat{H}_{MF}$ and $\widehat{H}_{FFT}$ .

Step S602. When a pilot symbol is a first pilot symbol 0, regard a matched filtering channel estimate as a channel estimate of the pilot symbol 0 by default, which may be marked as $\widehat{H}_{F\_0} = \widehat{H}_{MF\_0}$ , and estimate sending content of all symbols 1 to N+1 by the channel estimate $\widehat{H}_{F\_0}$ of the pilot symbol 0.

Step S603. Select a channel estimate of a pilot symbol iN according to content of preceding and next data symbols iN-1 and iN+1 of the pilot symbol iN, which may be marked as $\widehat{H}_{F\_iN}$ , where i is a positive integer.

A specific manner is as follows: when the content of the data symbol iN+1 is different from content of the pilot symbol iN, selecting an FFT channel estimate $\widehat{H}_{FFT}$ of the pilot symbol iN as a channel estimate of the pilot symbol iN, that is, $\widehat{H}_{F\_iN}=\widehat{H}_{FFT}$ ; otherwise, selecting a matched filtering channel estimate $\widehat{H}_{MF}$ of the pilot symbol iN as the channel estimate of the pilot symbol iN, that is, $\widehat{H}_{F\_iN}=\widehat{H}_{MF}$ . The channel estimate $\widehat{H}_{F\_iN}$ of the pilot symbol iN is determined according to Table 3.

Step S604. Filter the determined channel estimate $\widehat{H}_{F\_iN}$ of the pilot symbol iN, to obtain a channel estimate $\widehat{H}_{FF\_iN}$ of the pilot symbol iN.

Step S605. Estimate sending content of all symbols iN+2 to (i+1)N+1 by the channel estimate $\widehat{H}_{FF\_iN}$ of the pilot symbol iN obtained through filtering, and return to step S603, until the channel estimate of each pilot symbol and sending content of each data symbol are obtained.

It should be noted that, a pilot symbol is usually a known symbol during channel estimation. Therefore, when received data symbols are demodulated or estimated, the pilot symbol may not be demodulated or estimated. Instead, the known pilot symbol may directly be used. Apparently, the pilot symbol may also be demodulated or estimated to ensure accuracy of the pilot symbol, thereby ensuring channel estimation accuracy and improving channel estimation performance.

Further, an example in which the first channel estimation manner is the FFT channel estimation manner and the second channel estimation manner is the matched filtering channel estimation manner is used theoretically blow to show the effects of the foregoing embodiments.

Specifically, if a transmitted chirp signal is $s(k)=\beta e^{j2\pi\left(\frac{(k-K)^2}{2^{SF+1}}\right)}$ , where in the formula, $\beta$ represents a value obtained after the sending signal is modulated, $k$ represents an index of the sending signal ranging from $0 \sim 2^{SF-1}$, K represents an index corresponding to an initial phase of the sending signal, and SF represents a spreading factor, a receiving signal may be represented in the form of a matrix:

$$R = XH + W \quad (6)$$

R represents a receiving signal vector, and $R=(r_0, r_1, ...,r_{N-1})^T$, where $N=2^{SF}$, and $r_i$ represents an $i^{th}$ chirp receiving signal sampling value in a symbol; W represents white Gaussian noise, and $W = (w_0, w_1,...,w_{N-1})^T$ ; $H$ represents a channel estimate, and $H=(h_{-L1},...,h_{-1},h_0,h_1,h_2,...,h_{L2-1})^T$ because of impact of a filter, where $h_l$ represents a channel response value of a $1^{st}$ path, $h_{L2-1}$ represents an h value corresponding to a maximum delay of a channel under impact of a filter, and $h_{-L1}$ represents an h value corresponding to a maximum delay after a channel extends forward under impact of a filter; and X represents a matrix formed by sending signals, and may be represented as:

$$X = \begin{bmatrix} S_{L1}^m & ... & S_1^m & S_0^m & S_{N-1}^{m-1} & ... & S_{N-L2+1}^{m-1} \\ S_{L1+1}^m & ... & S_2^m & S_1^m & S_0^{m-1} & ... & S_{N-L2+2}^{m-1} \\ ... & ... & ... & ... & ... & ... & ... \\ S_{L1}^{m+1} & ... & S_0^{m+1} & S_{N-1}^m & S_{N-2}^m & ... & S_{N-L2}^m \end{bmatrix} \quad (7)$$

$S_n^m$ represents an $n^{th}$ transmitted chirp signal sampling value in an $m^{th}$ symbol.

When the matched filtering channel estimation manner is used to perform channel estimation on a pilot symbol, the estimation manner shown in FIG. 3 may be used. That is, convolution operation is performed on a received pilot symbol and a matched filter, to obtain a matched filtering channel estimate of the pilot symbol, which may be marked as $\hat{H}_{MF}$ . The matched filter is a conjugate of a sent pilot symbol, that is, a conjugate of an up-chirp signal. Therefore, a matrix of the matched filtering channel estimation may be represented as:

$$\hat{H}_{MF} = \frac{1}{2^{SF}} \widetilde{X}_{MF}^{H} \widetilde{R} \qquad (8)$$

$$\widetilde{R} = \left( r_0^{m}, r_1^{m}, r_2^{m}, \ldots, r_{N-1}^{m}, r_0^{m+1}, \ldots, r_{L2-1}^{m+1} \right)^{T} \text{, and } \widetilde{X}_{MF}^{H} \text{ is as follows:}$$

$$\widetilde{X}_{MF}^{H} = \begin{bmatrix} \left(S_0^{m}\right)^{*} & \left(S_1^{m}\right)^{*} & \ldots & \left(S_{N-1}^{m}\right)^{*} & 0 & \ldots & 0 \\ 0 & \left(S_0^{m}\right)^{*} & \ldots & \left(S_{N-2}^{m}\right)^{*} & \left(S_{N-1}^{m}\right)^{*} & \ldots & 0 \\ \ldots & \ldots & \ldots & \ldots & \ldots & \ldots & \ldots \\ 0 & 0 & \ldots & \left(S_{N-L2}^{m}\right)^{*} & \left(S_{N-L2+1}^{m}\right)^{*} & \ldots & \left(S_{N-1}^{m}\right)^{*} \end{bmatrix} \qquad (9)$$

For the matched filtering channel estimation (in which sending content of preceding and next symbols may be different):

$$\widetilde{R} = \left( X_{MF\_ideal} + X_{MF\_1} + X_{MF\_2} - X_{MF\_3} - X_{MF\_4} \right) H + W \qquad (10)$$

$X_{MF\_ideal}$, $X_{MF\_1}$, $X_{MF\_2}$, $X_{MF\_3}$, and $X_{MF\_4}$ are as follows:

$$X_{MF\_ideal} = \begin{bmatrix} S_{L1}^{m} & \ldots & S_1^{m} & S_0^{m} & S_{N-1}^{m} & \ldots & S_{N-L2+1}^{m} \\ S_{L1+1}^{m} & \ldots & S_2^{m} & S_1^{m} & 0 & \ldots & S_{N-L2+2}^{m} \\ \ldots & \ldots & \ldots & \ldots & \ldots & \ldots & \ldots \\ S_{L1}^{m} & \ldots & S_0^{m} & 0 & 0 & \ldots & S_{N-L2}^{m} \\ S_{L1+1}^{m} & \ldots & S_1^{m} & S_0^{m} & 0 & \ldots & S_{N-L2+1}^{m} \\ \ldots & \ldots & \ldots & \ldots & \ldots & \ldots & \ldots \\ S_{L1+L2}^{m} & \ldots & S_{L2}^{m} & S_{L2-1}^{m} & S_{L2-2}^{m} & \ldots & S_{N-1}^{m} \end{bmatrix} \qquad (11)$$

$$X_{MF\_1} = \begin{bmatrix} 0 & \ldots & 0 & 0 & S_{N-1}^{m-1} & \ldots & S_{N-L2+1}^{m-1} \\ 0 & \ldots & 0 & 0 & 0 & \ldots & S_{N-L2+2}^{m-1} \\ \ldots & \ldots & \ldots & \ldots & \ldots & \ldots & \ldots \\ 0 & \ldots & 0 & 0 & 0 & \ldots & 0 \\ 0 & \ldots & 0 & 0 & 0 & \ldots & 0 \\ \ldots & \ldots & \ldots & \ldots & \ldots & \ldots & \ldots \\ 0 & \ldots & 0 & 0 & 0 & \ldots & 0 \end{bmatrix} \qquad (12)$$

$$X_{MF\_2} = \begin{bmatrix} 0 & \dots & 0 & 0 & 0 & \dots & 0 \\ 0 & \dots & 0 & 0 & 0 & \dots & 0 \\ \dots & \dots & \dots & \dots & \dots & \dots & \dots \\ S_{L1}^{m+1} & \dots & S_0^{m+1} & 0 & 0 & \dots & 0 \\ S_{L1+1}^{m+1} & \dots & S_1^{m+1} & S_0^{m+1} & 0 & \dots & 0 \\ \dots & \dots & \dots & \dots & \dots & \dots & \dots \\ S_{L1+L2}^{m+1} & \dots & S_{L2}^{m+1} & S_{L2-1}^{m+1} & S_{L2-2}^{m+1} & \dots & 0 \end{bmatrix} \quad (13)$$

$$X_{MF\_3} = \begin{bmatrix} 0 & \dots & 0 & 0 & S_{N-1}^{m} & \dots & S_{N-L2+1}^{m} \\ 0 & \dots & 0 & 0 & 0 & \dots & S_{N-L2+2}^{m} \\ \dots & \dots & \dots & \dots & \dots & \dots & \dots \\ 0 & \dots & 0 & 0 & 0 & \dots & 0 \\ 0 & \dots & 0 & 0 & 0 & \dots & 0 \\ \dots & \dots & \dots & \dots & \dots & \dots & \dots \\ 0 & \dots & 0 & 0 & 0 & \dots & 0 \end{bmatrix} \quad (14)$$

$$X_{MF\_4} = \begin{bmatrix} 0 & \dots & 0 & 0 & 0 & \dots & 0 \\ 0 & \dots & 0 & 0 & 0 & \dots & 0 \\ \dots & \dots & \dots & \dots & \dots & \dots & \dots \\ S_{L1}^{m} & \dots & S_0^{m} & 0 & 0 & \dots & 0 \\ S_{L1+1}^{m} & \dots & S_1^{m} & S_0^{m} & 0 & \dots & 0 \\ \dots & \dots & \dots & \dots & \dots & \dots & \dots \\ S_{L1+L2}^{m} & \dots & S_{L2}^{m} & S_{L2-1}^{m} & S_{L2-2}^{m} & \dots & 0 \end{bmatrix} \quad (15)$$

The channel estimation is:

$$\hat{H}_{MF} = \frac{1}{2^{SF}} \tilde{X}_{MF}^{H} \tilde{R} = \frac{1}{2^{SF}} \left( H + \tilde{X}_{MF}^{H} I_{MF} H + \tilde{X}_{MF}^{H} W \right) \quad (16)$$

$\tilde{X}_{MF}^{H} I_{MF} H = \tilde{X}_{MF}^{H} \left( I_{MF\_1} + I_{MF\_2} - I_{MF\_3} - I_{MF\_4} \right) H$ and represents interference ISI.

When the FFT channel estimation manner is used to perform channel estimation on a pilot symbol, the estimation manner shown in FIG. 4 may be used. That is, a received pilot symbol is multiplied by a conjugate of a sent pilot symbol first, and then IFFT is performed, and then a transformation result is multiplied by a rotation phase, to obtain an FFT channel estimate of the pilot symbol, which may be marked as $\hat{H}_{FFT}$. The rotation phase may be obtained according to an initial phase of the pilot symbol and a multipath index, and may be specifically obtained by the formula $e^{j\frac{-2\pi(n^2-2Kn)}{2^{SF+1}}}$ through calculation. In the formula, K represents an index corresponding to the initial phase of the pilot symbol, that is, an initial phase of a chirp signal, n represents a multipath index, and SF represents a spreading factor. Therefore, a matrix of the FFT channel estimation may be represented as:

$$\hat{H}_{FFT\_ALL} = P * IFFTW * diag\left(S_0^*, S_1^*, S_{2^{SF}-1}^*\right)R = BR \quad (17)$$

$$P = diag\left(e^{j\frac{-2\pi(0^2+0)}{2^{SF+1}}}, e^{j\frac{-2\pi(1^2+K)}{2^{SF+1}}}, \ldots, e^{j\frac{-2\pi\left(\left(2^{SF}-1\right)^2+K\left(2^{SF}-1\right)\right)}{2^{SF+1}}}\right)$$ , and IFFTW represents an IFFT matrix.

B can be derived to be:

$$B = \begin{bmatrix} S_0^m & S_{N-1}^m & \ldots & S_1^m \\ S_1^m & S_0^m & \ldots & S_2^m \\ \ldots & \ldots & \ldots & \ldots \\ S_{N-1}^m & S_{N-2}^m & \ldots & S_0^m \end{bmatrix}^H \quad (18)$$

Channel estimation of $\hat{H}_{FFT}=(\hat{h}_0,\hat{h}_1,\hat{h}_2,\ldots,\hat{h}_{L2-1})^T$ is estimated to be:

$$\hat{H}_{FFT} = \frac{1}{2^{SF}}\tilde{X}_{FFT}^H\tilde{R} = \frac{1}{2^{SF}}\tilde{X}_{FFT}^H\left(XH + W\right) \quad (19)$$

$\tilde{X}_{FFT}^H$ represents line 1 to line L2 of B, and X=X$_{FFT\_ideal}$ + I$_{FFT\_1}$ + I$_{FFT\_2}$ -I$_{FFT\_3}$- I$_{FFT\_4}$ , where X$_{FFT\_ideal}$ , I$_{FFT\_1}$, I$_{FFT\_2}$ , I$_{FFT\_3}$, and I$_{FFT\_4}$ are as follows:

$$X_{FFT\_ideal} = \begin{bmatrix} S_{L1}^m & \ldots & S_1^m & S_0^m & S_{N-1}^m & \ldots & S_{N-L2+1}^m \\ S_{L1+1}^m & \ldots & S_2^m & S_1^m & S_0^m & \ldots & S_{N-L2+2}^m \\ \ldots & \ldots & \ldots & \ldots & \ldots & \ldots & \ldots \\ S_{L1}^m & \ldots & S_0^m & S_{N-1}^m & S_{N-2}^m & \ldots & S_{N-L2}^m \end{bmatrix} \quad (20)$$

$$I_{FFT\_1} = \begin{bmatrix} 0 & \ldots & 0 & 0 & S_{N-1}^{m-1} & \ldots & S_{N-L2+1}^{m-1} \\ 0 & \ldots & 0 & 0 & 0 & \ldots & S_{N-L2+2}^{m-1} \\ \ldots & \ldots & \ldots & \ldots & \ldots & \ldots & \ldots \\ 0 & \ldots & 0 & 0 & 0 & \ldots & 0 \end{bmatrix} \quad (21)$$

$$\mathrm{X}_{FFT\_2} = \begin{bmatrix} 0 & \dots & 0 & 0 & 0 & \dots & 0 \\ \dots & \dots & \dots & \dots & \dots & \dots & \dots \\ S_0^m & \dots & 0 & 0 & 0 & \dots & 0 \\ \dots & \dots & \dots & \dots & \dots & \dots & \dots \\ S_{L1}^{m+1} & \dots & S_0^{m+1} & 0 & 0 & \dots & 0 \end{bmatrix} \quad (22)$$

$$\mathrm{X}_{FFT\_3} = \begin{bmatrix} 0 & \dots & 0 & 0 & S_{N-1}^m & \dots & S_{N-L2+1}^m \\ 0 & \dots & 0 & 0 & 0 & \dots & S_{N-L2+2}^m \\ \dots & \dots & \dots & \dots & \dots & \dots & \dots \\ 0 & \dots & 0 & 0 & 0 & \dots & 0 \end{bmatrix} \quad (23)$$

$$\mathrm{X}_{FFT\_ideal} = \begin{bmatrix} 0 & \dots & 0 & 0 & 0 & \dots & 0 \\ \dots & \dots & \dots & \dots & \dots & \dots & \dots \\ S_0^m & \dots & 0 & 0 & 0 & \dots & 0 \\ \dots & \dots & \dots & \dots & \dots & \dots & \dots \\ S_{L1}^m & \dots & S_0^m & 0 & 0 & \dots & 0 \end{bmatrix} \quad (24)$$

The channel estimation is:

$$\hat{H}_{FFT} = \frac{1}{2^{SF}} \widetilde{X}_{FFT}^H \widetilde{R} = \frac{1}{2^{SF}} \left( H + \widetilde{X}_{FFT}^H I_{FFT} H + \widetilde{X}_{FFT}^H W \right) \quad (25)$$

$\widetilde{X}_{FFT}^H I_{FFT} H = \widetilde{X}_{FFT}^H \left( I_{FFT\_1} + I_{FFT\_2} - I_{FFT\_3} - I_{FFT\_4} \right) H$ and represents interference ISI.

The following may be obtained by analyzing the interference ISI:

1. When the preceding data symbol of the pilot symbol and the next data symbol of the pilot symbol are the same as the pilot symbol, that is, $I_{FFT\_i} = I_{MF\_i} = 0$, $i = 1 \sim 4$, if no interference ISI exists, results of the matched filtering channel estimation and the FFT channel estimation are the same;

2. When the preceding data symbol of the pilot symbol and the next data symbol of the pilot symbol are different from the pilot symbol, that is, $I_{FFT\_i} \neq 0$, $I_{MF\_i} \neq 0$, $i = 1 \sim 4$, for $\hat{h}_0$, the two channel estimation manners have the same interference ISI. In the FFT channel estimation manner, the ISI impact rarely changes for $\hat{h}_i, i > 0$ as i becomes greater. In the matched filtering channel estimation, the ISI impact becomes greater for $\hat{h}_i, i < 0$ and smaller for $\hat{h}_i, i > 0$ as i becomes greater. In an actual channel, $\hat{h}_i$ signal energy mainly exists when i>0. Therefore, for $\hat{h}_i, i > 0$, performance of the matched filtering channel estimation manner is better;

3. When the preceding data symbol of the pilot symbol is the same as the pilot symbol and the next data symbol of the pilot symbol is different from the pilot symbol, that is, $I_{MF\_1} = I_{MF\_3} = I_{FFT\_1} = I_{FFT\_3} = 0$, and $I_{FFT\_i} \neq 0$, $I_{MF\_i} \neq 0$, $i = 2,4$, in the FFT channel estimation manner, the ISI impact rarely changes for $\hat{h}_i, i > 0$ as i becomes greater. In the matched filtering channel estimation, the ISI impact becomes greater for $\hat{h}_i, i < 0$ as i becomes greater. Therefore, performance of the FFT channel estimation manner is better;

4. When the preceding data symbol of the pilot symbol is different from the pilot symbol and the next data symbol of the pilot symbol is the same as the pilot symbol, that is, $I_{MF\_2} = I_{MF\_4} = I_{FFT\_2} = I_{FFT\_4} = 0$, and $I_{FFT\_i} \neq 0$, $I_{MF\_i} \neq 0$, $i = 1,3$, in the FFT channel estimation manner, the ISI impact rarely changes for $\hat{h}_i, i > 0$ as i becomes greater. In the matched filtering channel estimation, the ISI impact becomes smaller for $\hat{h}_i, i < 0$ as i becomes greater. Therefore, performance of the matched filtering channel estimation is better.

For the effects of channel estimation performed when the first channel estimation manner is the LS channel estimation manner and the second channel estimation manner is the matched filtering channel estimation manner, and when the first channel estimation manner is the MMSE channel estimation manner and the second channel estimation manner is the matched filtering channel estimation manner, corresponding theoretical analysis is not provided herein.

It can be learned from the above that, channel estimation is performed in any of the manners in Table 3 according to the content of the pilot symbol and the content of the preceding and next data symbols of the pilot symbol, so that the obtained channel estimate of each pilot symbol is good. This can ensure accuracy of the channel estimate and improve channel estimation performance and demodulation performance of a linear frequency modulation signal.

In this embodiment, a suitable channel estimate is selected from a plurality of channel estimates according to content of the next pilot symbol and the content of the preceding and next data symbols, so that accuracy of the channel estimate is improved. In this way, channel estimation performance and demodulation performance of a linear frequency modulation signal can be improved.

For a fourth embodiment of the channel estimation method:

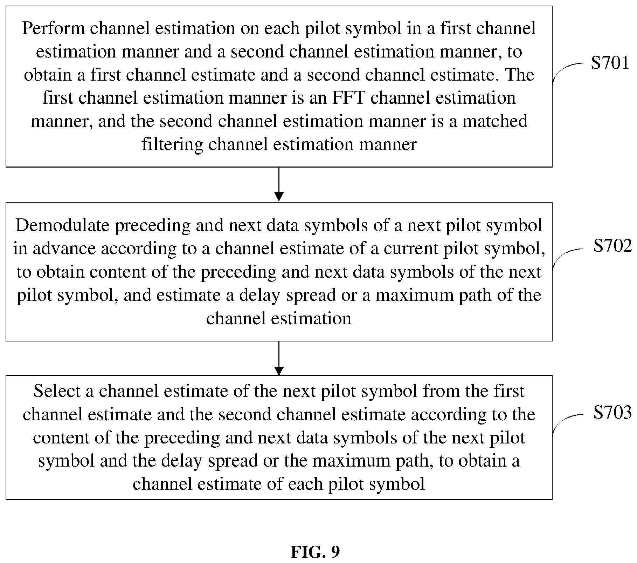

Refer to FIG. 9, the channel estimation method for a linear frequency modulation communications system may include the following steps:

Step S701. Perform channel estimation on each pilot symbol in a first channel estimation manner and a second channel estimation manner, to obtain a first channel estimate and a second channel estimate. The first channel estimation manner is an FFT channel estimation manner, and the second channel estimation manner is a matched filtering channel estimation manner. Please refer to relevant description in step S501, and details are not described herein again.

Step S702. Demodulate preceding and next data symbols of a next pilot symbol in advance according to a channel estimate of a current pilot symbol, to obtain content of the preceding and next data symbols of the next pilot symbol, and estimate a delay spread or a maximum path of a channel.

It should be noted that, for the demodulating preceding and next data symbols of a next pilot symbol in advance according to a channel estimate of a current pilot symbol, to obtain content of the preceding and next data symbols of the next pilot symbol in step S702, please refer to relevant description in step S502, and details are not described herein again.

Further, optionally, before selecting the channel estimate of the next pilot symbol as the channel estimate of the current pilot symbol to demodulate in advance the preceding and next data symbols of the next pilot symbol, the method further includes filtering the selected channel estimate of the next pilot symbol. Please refer to relevant description in step S502, and details are not described herein again.

How to estimate a delay spread or a maximum path of the channel is mainly described herein. It should be noted that, estimation of a delay spread or a maximum path may be performed at an interval of a preset number (for example, 1, 2 and the like) of pilot symbols.

Optionally, in some embodiments, the estimating a delay spread or a maximum path of the channel includes: obtaining a first delay spread or a first maximum path according to a synchronous signal; obtaining a second delay spread or a second maximum path according to the pilot symbol; and estimating the delay spread of the channel according to at least one of the first delay spread and the second delay spread, or estimating the maximum path of the channel according to at least one of the first maximum path and the second maximum path.

Further, optionally, the obtaining a first delay spread or a first maximum path according to a synchronous signal includes: performing, if the synchronous signal is sent in an up chirp manner, pointwise multiplication on a received synchronous signal and a conjugate of the sent synchronous signal, and performing IFFT, to obtain a first power spectrum; or performing, if the synchronous signal is sent in a down chirp manner, pointwise multiplication on a received synchronous signal and a conjugate of the sent synchronous signal, and performing FFT, to obtain a second power spectrum; and obtaining the first delay spread according to the first power spectrum or the second power spectrum through calculation, or obtaining the first maximum path according to the first power spectrum or the second power spectrum through calculation.

Further, optionally, the obtaining a second delay spread or a second maximum path according to the pilot symbol includes: performing, if the pilot symbol is sent in an up chirp manner, pointwise multiplication on a received pilot symbol and a conjugate of the sent pilot symbol, and performing IFFT, to obtain a third power spectrum; or performing, if the pilot symbol is sent in a down chirp manner, pointwise multiplication on a received pilot symbol and a conjugate of the sent pilot symbol, and performing FFT, to obtain a fourth power spectrum; and obtaining the second delay spread according to the third power spectrum or the fourth power spectrum through calculation, or obtaining the second maximum path according to the third power spectrum or the fourth power spectrum through calculation.

Further, optionally, the estimating the delay spread of the channel according to at least one of the first delay spread and the second delay spread includes: filtering the first delay spread to obtain the delay spread of the channel, or filtering the second delay spread to obtain the delay spread of the channel, or performing weighting calculation on the filtered first delay spread and the filtered second delay spread, to obtain the delay spread of the channel.

Further, optionally, the estimating the maximum path of the channel according to at least one of the first maximum path and the second maximum path includes: filtering the first maximum path to obtain the maximum path of the channel, or filtering the second maximum path to obtain the maximum path of the channel, or performing weighting calculation on the filtered first maximum path and the filtered second maximum path, to obtain the maximum path of the channel.

It should be noted that, for the estimating a delay spread or a maximum path of the channel, please refer to relevant description in step S201, and details are not described herein again.

Step S703. Select a channel estimate of the next pilot symbol from the first channel estimate and the second channel estimate according to the content of the preceding and next data symbols of the next pilot symbol and the delay spread or the maximum path, to obtain a channel estimate of each pilot symbol.

That is, in this application, the channel estimate of the next pilot symbol may be obtained according to the content of the next pilot symbol, the content of the preceding and next data symbols of the next pilot symbol, and the delay spread. Or, the channel estimate of the next pilot symbol may be obtained according to the content of the next pilot symbol, the content of the preceding and next data symbols of the next pilot symbol, and the maximum path. During actual application, either of the delay spread and the maximum path may be used.

Specifically, supposing that the current pilot symbol is the first pilot symbol, for example, the pilot symbol 0 shown in FIG. 1, after the content of the pilot symbol N, the data symbol N-1 and the data symbol N+1 is estimated according to the channel estimate of the pilot symbol 0, the channel estimate of the pilot symbol N may be determined from the first channel estimate (that is, the FFT channel estimate) and the second channel estimate (that is, the matched filtering channel estimate) according to the content of the pilot symbol N, the data symbol N-1 and the data symbol N+1, and the delay spread (or the maximum path) of the channel estimation obtained through estimation. When the pilot symbol is not the first pilot symbol, for example, is the pilot symbol N shown in FIG. 1, after the content of the pilot symbol 2N, the data symbol 2N-1 and the data symbol 2N+1 is estimated according to the channel estimate of the pilot symbol N, the channel estimate of the pilot symbol 2N may be determined from the first channel estimate (that is, the FFT channel estimate) and the second channel estimate (that is, the matched filtering channel estimate) according to the content of the pilot symbol 2N, the data symbol 2N-1 and the data symbol 2N+1, and the delay spread (or the maximum path) of the channel estimation obtained through estimation. The rest can be deduced by analog, until a channel estimate of each pilot symbol is obtained.

Optionally, in some embodiments, the selecting a channel estimate of the next pilot symbol from the first channel estimate and the second channel estimate according to the content of the preceding and next data symbols of the next pilot symbol and the delay spread or the maximum path includes: when the delay spread or the maximum path is equal to or greater than a preset threshold, if the content of the preceding data symbol of the next pilot symbol is the same as content of the next pilot symbol, selecting the first channel estimate as the channel estimate of the next pilot symbol; otherwise, selecting the second channel estimate as the channel estimate of the next pilot symbol; or when the delay spread or the maximum path is less than the preset threshold, if the content of the next data symbol of the next pilot symbol is the same as the content of the next pilot symbol, selecting the second channel estimate as the channel estimate of the next pilot symbol; otherwise, selecting the first channel estimate as the channel estimate of the next pilot symbol.

Specifically, supposing that the current pilot symbol is the first pilot symbol, for example, the pilot symbol 0 shown in FIG. 1, when the delay spread (or the maximum path) obtained at the pilot symbol N is less than the preset threshold, for example, 0.25 $\mu$s, if the content of the next data symbol N+1 of the pilot symbol N is the same as the content of the pilot symbol N, the channel estimate of the pilot symbol N is an estimate obtained by performing channel estimation in the second channel estimation manner, that is, the second channel estimate (that is, the matched filtering channel estimate); otherwise, the channel estimate of the pilot symbol N is an estimate obtained by performing channel estimation in the first channel estimation manner, that is, the first channel estimate (that is, the FFT channel estimate). When the delay spread (or the maximum path) obtained at the pilot symbol N is equal to or greater than the preset threshold, for example, 0.25 $\mu$s, if the content of the preceding data symbol N-1 of the pilot symbol N is the same as the content of the pilot symbol N, the channel estimate of the pilot symbol N is an estimate obtained by performing channel estimation in the first channel estimation manner, that is, the first channel estimate (that is, the FFT channel estimate); otherwise, the channel estimate of the pilot symbol N is an estimate obtained by performing channel estimation in the second channel estimation manner, that is, the second channel estimate (that is, the matched filtering channel estimate).

Similarly, if the pilot symbol is not the first pilot symbol, for example, is the pilot symbol N shown in FIG. 1, when the delay spread (or the maximum path) obtained at the pilot symbol 2N is less than the preset threshold, for example, 0.25 $\mu$s, if the content of the next data symbol 2N+1 of the pilot symbol 2N is the same as the content of the pilot symbol 2N, the channel estimate of the pilot symbol 2N is an estimate obtained by performing channel estimation in the second channel estimation manner, that is, the second channel estimate (that is, the matched filtering channel estimate); otherwise, the channel estimate of the pilot symbol 2N is an estimate obtained by performing channel estimation in the first channel estimation manner, that is, the first channel estimate (that is, the FFT channel estimate). When the delay spread

(or the maximum path) obtained at the pilot symbol 2N is equal to or greater than the preset threshold, for example, 0.25 μs, if the content of the preceding data symbol 2N-1 of the pilot symbol 2N is the same as the content of the pilot symbol 2N, the channel estimate of the pilot symbol 2N is an estimate obtained by performing channel estimation in the first channel estimation manner, that is, the first channel estimate (that is, the FFT channel estimate); otherwise, the channel estimate of the pilot symbol 2N is an estimate obtained by performing channel estimation in the second channel estimation manner, that is, the second channel estimate (that is, the matched filtering channel estimate).

The channel estimate of each pilot symbol can be obtained by analog. In short, channel estimation may be performed in any of the manners in Table 4 according to the content of the pilot symbol, the content of the preceding and next data symbols of the pilot symbol, and the delay spread or the maximum path, to obtain the channel estimate of each pilot symbol.

Table 4

| Sequence | A relationship between content of a pilot symbol and content of a preceding data symbol of the pilot symbol | A relationship between content of a pilot symbol and content of a next data symbol of the pilot symbol | A channel estimation manner of a pilot symbol when a delay spread or a maximum path is equal to or greater than a preset threshold | A channel estimation manner of a pilot symbol when a delay spread or a maximum path is less than a preset threshold |
|---|---|---|---|---|
| 1 | Same | Same | FFT channel estimation manner or matched filtering channel estimation manner | Matched filtering channel estimation manner or FFT channel estimation manner |
| 2 | Same | Different | FFT channel estimation manner | FFT channel estimation manner |
| 3 | Different | Same | Matched filtering channel estimation manner | Matched filtering channel estimation manner |
| 4 | Different | Different | Matched filtering channel estimation manner | FFT channel estimation manner |

It should be noted that, in Table 4, the first channel estimation manner is the FFT channel estimation manner, and the second channel estimation manner is the matched filtering channel estimation manner.

In addition, it should be noted that, when the current pilot symbol is the first pilot symbol, for example, the pilot symbol 0 shown in FIG. 1, the second channel estimate (that is, the matched filtering channel estimate) may be regarded as the channel estimate of the first pilot symbol by default. In addition, when both the content of the preceding and next data symbols of the pilot symbol is the same as the content of the pilot symbol, as the first case shown in Table 4, whatever the delay spread or the maximum path is, the channel estimate of the pilot symbol may be obtained in the FFT channel estimation manner or the matched filtering channel estimation manner, and there is little difference between accuracy of obtained channel estimates.

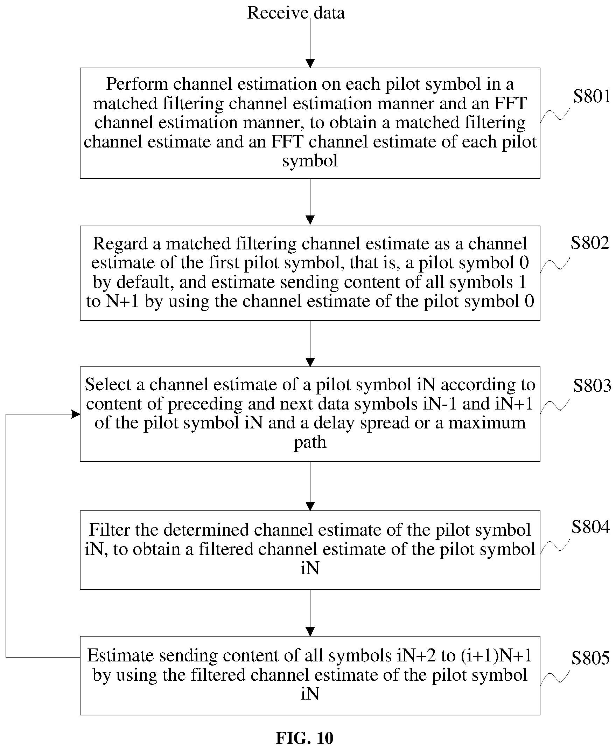

In a specific example, refer to FIG. 10, the channel estimation method for a linear frequency modulation communications system may include:

Step S801. Perform channel estimation on each pilot symbol in the matched filtering channel estimation manner and the FFT channel estimation manner, to obtain a matched filtering channel estimate and an FFT channel estimate of each pilot symbol, which may be respectively marked as $\widehat{H}_{MF}$ and $\widehat{H}_{FFT}$.

Step S802. When the pilot symbol is the first pilot symbol 0, regard the matched filtering channel estimate as the channel estimate of the pilot symbol 0 by default, which may be marked as $\widehat{H}_{F\_0} = \widehat{H}_{MF\_0}$, and estimate sending content of all symbols 1 to N+1 according to the channel estimate $\widehat{H}_{F\_0}$ of the pilot symbol 0.

Step S803. Select a channel estimate of a pilot symbol iN according to content of preceding and next data symbols iN-1 and iN+1 of the pilot symbol iN and a delay spread or a maximum path, which may be marked as $\widehat{H}_{F\_iN}$, where i is a positive integer.

A specific manner is as follows. Estimation is performed at an interval of one or a plurality of pilot symbols to obtain a delay spread or a maximum path of the channel. When the delay spread or the maximum path is equal to or greater than the preset threshold (for example, 0.25 $\mu$s), it is considered that the delay spread or the maximum path is great; otherwise, it is considered that the delay spread or the maximum path is small. If the delay spread or the maximum path is great, when the content of the data symbol iN-1 is the same as the content of the pilot symbol iN, the FFT channel estimate $\hat{H}_{FFT}$ of the pilot symbol iN is used as the channel estimate of the pilot symbol iN, that is, $\hat{H}_{F\_iN}=\hat{H}_{FFT}$ ; otherwise, the matched filtering channel estimate $\hat{H}_{MF}$ of the pilot symbol iN is used as the channel estimate of the pilot symbol iN, that is, $\hat{H}_{F\_iN}=\hat{H}_{MF}$ . If the delay spread or the maximum path is small, when the content of the data symbol iN+1 is the same as the content of the pilot symbol iN, the matched filtering channel estimate $\hat{H}_{MF}$ of the pilot symbol iN is used as the channel estimate of the pilot symbol iN, that is, $\hat{H}_{F\_iN}=\hat{H}_{MF}$ ; otherwise, the FFT channel estimate $\hat{H}_{FFT}$ of the pilot symbol iN is used as the channel estimate of the pilot symbol iN, that is, $\hat{H}_{F\_iN}=\hat{H}_{FFT}$ . In this way, the channel estimate $\hat{H}_{F\_iN}$ of the pilot symbol iN is determined according to Table 4.

Step S804. Filter the determined channel estimate $\hat{H}_{F\_iN}$ of the pilot symbol iN, to obtain a channel estimate $\hat{H}_{FF\_iN}$ of the pilot symbol iN.

Step S805. Estimate sending content of all symbols iN+2 to (i+1)N+1 by the channel estimate $\hat{H}_{FF\_iN}$ of the pilot symbol iN obtained through filtering, and return to step S803, until the channel estimate of each pilot symbol and sending content of each data symbol are obtained.

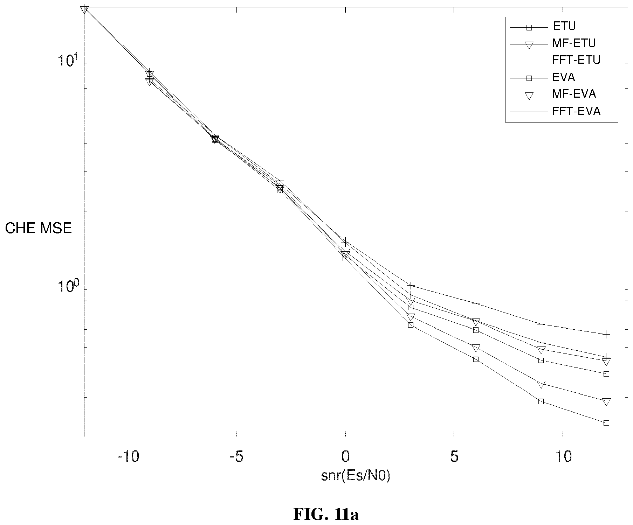

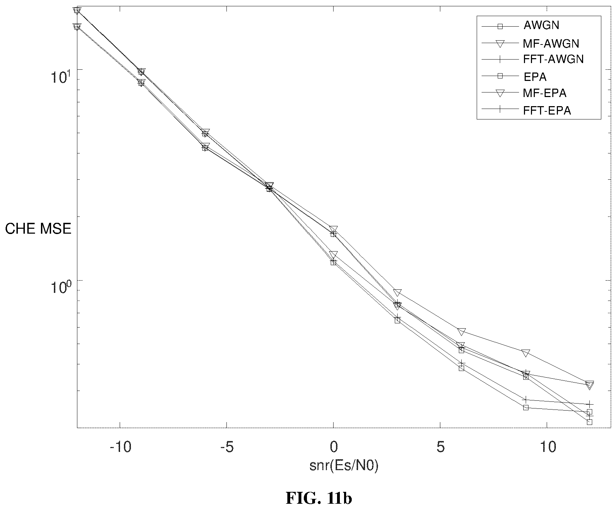

Further, whether channel estimation performance is improved may be verified by an emulation test. For example, a system bandwidth may be set to 3.6 MHz, a spreading factor to 3, and a delay spread threshold to 0.25 $\mu$s. It can be determined according to the threshold that channel models ETU and EVA are of large delay spreads, and channel models AWGN and EPA are of small delay spreads. Then, emulation analysis is performed according to these channels. As shown in FIG. 11a and FIG. 11b, it can be determined from an emulation result that the channel estimation performance after optimization is apparently improved.

In this embodiment, a suitable channel estimate is selected from a plurality of channel estimates according to content of the next pilot symbol, the content of the preceding and next data symbols, and the delay spread or the maximum path of the channel. This can further improve accuracy of the channel estimate and effectively improve channel estimation performance and demodulation performance of a linear frequency modulation signal.

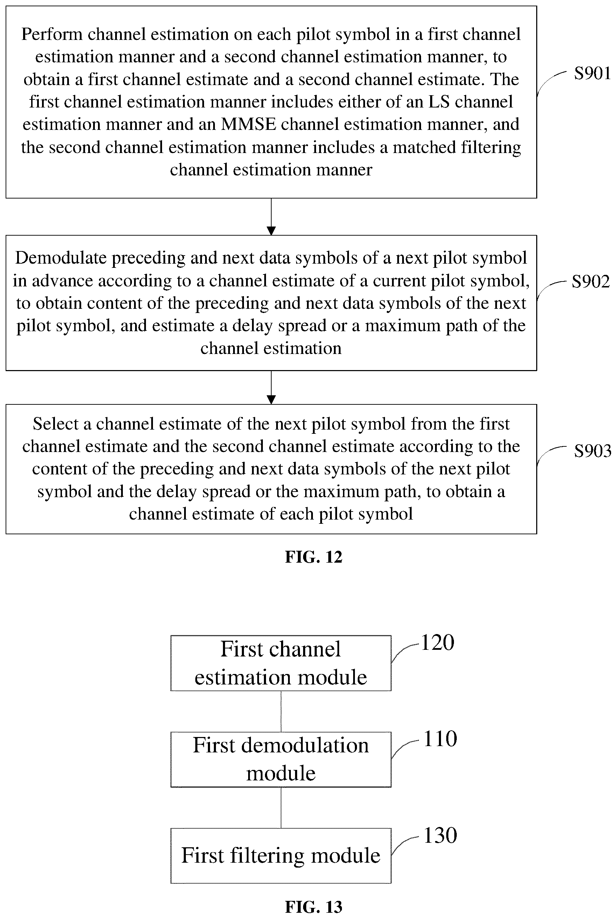

For a fifth embodiment of the channel estimation method:
Refer to FIG. 12, the channel estimation method for a linear frequency modulation communications system may include the following steps:

Step S901. Perform channel estimation on each pilot symbol in a first channel estimation manner and a second channel estimation manner, to obtain a first channel estimate and a second channel estimate. The first channel estimation manner includes either of an LS channel estimation manner and an MMSE channel estimation manner, and the second channel estimation manner includes a matched filtering channel estimation manner. Please refer to relevant description in step S501, and details are not described herein again.

Step S902. Demodulate preceding and next data symbols of a next pilot symbol in advance according to a channel estimate of a current pilot symbol, to obtain content of the preceding and next data symbols of the next pilot symbol, and estimate a delay spread or a maximum path of a channel.

It should be noted that, for the demodulating preceding and next data symbols of a next pilot symbol in advance according to a channel estimate of a current pilot symbol, to obtain content of the preceding and next data symbols of the next pilot symbol in step S902, please refer to relevant description in step S502, and details are not described herein again.

Further, optionally, before selecting the channel estimate of the next pilot symbol as the channel estimate of the current pilot symbol to demodulate in advance the preceding and next data symbols of the next pilot symbol, the method further includes filtering the selected channel estimate of the next pilot symbol. Please refer to relevant description in step S502, and details are not described herein again.

How to estimate a delay spread or a maximum path of the channel is mainly described herein. It should be noted that, estimation of a delay spread or a maximum path may be performed at an interval of a preset number (for example, 1, 2 and the like) of pilot symbols.

Optionally, in some embodiments, the estimating a delay spread or a maximum path of the channel includes: obtaining a first delay spread or a first maximum path according to a synchronous signal; obtaining a second delay spread or a second maximum path according to the pilot symbol; and estimating the delay spread of the channel according to at least one of the first delay spread and the second delay spread, or estimating the maximum path of the channel according to at least one of the first maximum path and the second maximum path.

Further, optionally, the obtaining a first delay spread or a first maximum path according to a synchronous signal includes: performing, if the synchronous signal is sent in an up chirp manner, pointwise multiplication on a received synchronous signal and a conjugate of the sent synchronous signal, and performing IFFT, to obtain a first power spectrum; or performing, if the synchronous signal is sent in a down chirp manner, pointwise multiplication on a received synchronous signal and a conjugate of the sent synchronous signal, and performing FFT, to obtain a second power spectrum; and obtaining the first delay spread according to the first power spectrum or the second power spectrum through calculation, or obtaining the first maximum path according to the first power spectrum or the second power spectrum through calculation.

Further, optionally, the obtaining a second delay spread or a second maximum path according to the pilot symbol includes: performing, if the pilot symbol is sent in an up chirp manner, pointwise multiplication on a received pilot symbol and a conjugate of the sent pilot symbol, and performing IFFT, to obtain a third power spectrum; or performing, if the pilot symbol is sent in a down chirp manner, pointwise multiplication on a received pilot symbol and a conjugate of the sent pilot symbol, and performing FFT, to obtain a fourth power spectrum; and obtaining the second delay spread according to the third power spectrum or the fourth power spectrum through calculation, or obtaining the second maximum path according to the third power spectrum or the fourth power spectrum through calculation.

Further, optionally, the estimating the delay spread of the channel according to at least one of the first delay spread and the second delay spread includes: filtering the first delay spread to obtain the delay spread of the channel, or filtering the second delay spread to obtain the delay spread of the channel, or performing weighting calculation on the filtered first delay spread and the filtered second delay spread, to obtain the delay spread of the channel.

Further, optionally, the estimating the maximum path of the channel according to at least one of the first maximum path and the second maximum path includes: filtering the first maximum path to obtain the maximum path of the channel, or filtering the second maximum path to obtain the maximum path of the channel, or performing weighting calculation on the filtered first maximum path and the filtered second maximum path, to obtain the maximum path of the channel.

It should be noted that, for the estimating a delay spread or a maximum path of the channel, please refer to relevant description in step S201, and details are not described herein again.

Step S903. Select a channel estimate of the next pilot symbol from the first channel estimate and the second channel estimate according to the content of the preceding and next data symbols of the next pilot symbol and the delay spread or the maximum path, to obtain a channel estimate of each pilot symbol.

That is, in this application, the channel estimate of the next pilot symbol may be obtained according to the content of the next pilot symbol, the content of the preceding and next data symbols of the next pilot symbol, and the delay spread. Or, the channel estimate of the next pilot symbol may be obtained according to the content of the next pilot symbol, the content of the preceding and next data symbols of the next pilot symbol, and the maximum path. During actual application, either of the delay spread and the maximum path may be used.

Specifically, supposing that the current pilot symbol is the first pilot symbol, for example, the pilot symbol 0 shown in FIG. 1, after the content of the pilot symbol N, the data symbol N-1 and the data symbol N+1 is estimated according to the channel estimate of the pilot symbol 0, the channel estimate of the pilot symbol N may be determined from the first channel estimate (for example, the LS channel estimate or the MMSE channel estimate) and the second channel estimate (for example, the matched filtering channel estimate) according to the content of the pilot symbol N, the data symbol N-1 and the data symbol N+1, and the delay spread (or the maximum path) of the channel estimation obtained through estimation. When the pilot symbol is not the first pilot symbol, for example, is the pilot symbol N shown in FIG. 1, after the content of the pilot symbol 2N, the data symbol 2N-1 and the data symbol 2N+1 is estimated according to the channel estimate of the pilot symbol N, the channel estimate of the pilot symbol 2N may be determined from the first channel estimate (for example, the LS channel estimate or the MMSE channel estimate) and the second channel estimate (for example, the matched filtering channel estimate) according to the content of the pilot symbol 2N, the data symbol 2N-1 and the data symbol 2N+1, and the delay spread (or the maximum path) of the channel estimation obtained through estimation. The rest can be deduced by analog, until a channel estimate of each pilot symbol is obtained.

Optionally, in some embodiments, the selecting a channel estimate of the next pilot symbol from the first channel estimate and the second channel estimate according to the content of the preceding and next data symbols of the next pilot symbol and the delay spread or the maximum path includes: when the delay spread or the maximum path is equal to or greater than a preset threshold, if the content of the preceding data symbol of the next pilot symbol is the same as content of the next pilot symbol, selecting the first channel estimate as the channel estimate of the next pilot symbol; otherwise, selecting the second channel estimate as the channel estimate of the next pilot symbol; or when the delay spread or the maximum path is less than the preset threshold, if the content of the next data symbol of the next pilot symbol is the same as the content of the next pilot symbol, selecting the second channel estimate as the channel estimate of the next pilot symbol; otherwise, selecting the first channel estimate as the channel estimate of the next pilot symbol.

Specifically, supposing that the current pilot symbol is the first pilot symbol, for example, the pilot symbol 0 shown in FIG. 1, when the delay spread (or maximum path) obtained at the pilot symbol N is less than the preset threshold, for example, 0.25 $\mu$s, if the content of the next data symbol N+1 of the pilot symbol N is the same as the content of the pilot symbol N, the channel estimate of the pilot symbol N is an estimate obtained by performing channel estimation in the second channel estimation manner, that is, the second channel estimate (for example, the matched filtering channel estimate); otherwise, the channel estimate of the pilot symbol N is an estimate obtained by performing channel estimation in the first channel estimation manner, that is, the first channel estimate (for example, the LS channel estimate or the MMSE channel estimate). When the delay spread (or the maximum path) obtained at the pilot symbol N is equal to or greater than the preset threshold, for example, 0.25 $\mu$s, if the content of the preceding data symbol N-1 of the pilot symbol N is the same as the content of the pilot symbol N, the channel estimate of the pilot symbol N is an estimate obtained by performing channel estimation in the first channel estimation manner, that is, the first channel estimate (for example, the LS channel estimate or the MMSE channel estimate); otherwise, the channel estimate of the pilot symbol N is an estimate obtained by performing channel estimation in the second channel estimation manner, that is, the second channel estimate (for example, the matched filtering channel estimate).

Similarly, if the pilot symbol is not the first pilot symbol, for example, is the pilot symbol N shown in FIG. 1, when the delay spread (or the maximum path) obtained at the pilot symbol 2N is less than the preset threshold, for example, 0.25 $\mu$s, if the content of the next data symbol 2N+1 of the pilot symbol 2N is the same as the content of the pilot symbol 2N, the channel estimate of the pilot symbol 2N is an estimate obtained by performing channel estimation in the second channel estimation manner, that is, the second channel estimate (for example, the matched filtering channel estimate); otherwise, the channel estimate of the pilot symbol 2N is an estimate obtained by performing channel estimation in the first channel estimation manner, that is, the first channel estimate (for example, the LS channel estimate or the MMSE channel estimate). When the delay spread (or the maximum path) obtained at the pilot symbol 2N is equal to or greater than the preset threshold, for example, 0.25 $\mu$s, if the content of the preceding data symbol 2N-1 of the pilot symbol 2N is the same as the content of the pilot symbol 2N, the channel estimate of the pilot symbol 2N is an estimate obtained by performing channel estimation in the first channel estimation manner, that is, the first channel estimate (for example, the LS channel estimate or the MMSE channel estimate); otherwise, the channel estimate of the pilot symbol 2N is an estimate obtained by performing channel estimation in the second channel estimation manner, that is, the second channel estimate (for example, the matched filtering channel estimate).

The channel estimate of each pilot symbol can be obtained by analog. In short, channel estimation may be performed in any of the manners in Table 5 according to the content of the pilot symbol, the content of the preceding and next data symbols of the pilot symbol, and the delay spread or the maximum path, to obtain the channel estimate of each pilot symbol.

Table 5

| Seque nce | A relationship between content of a pilot symbol and content of a preceding data symbol of the pilot symbol | A relationship between content of a pilot symbol and content of a next data symbol of the pilot symbol | A channel estimation manner of a pilot symbol when a delay spread or a maximum path is equal to or greater than a preset threshold | A channel estimation manner of a pilot symbol when a delay spread or a maximum path is less than a preset threshold |
|---|---|---|---|---|
| 1 | Same | Same | First channel estimation manner or second channel estimation manner | Second channel estimation manner or first channel estimation manner |
| 2 | Same | Different | First channel estimation manner | First channel estimation manner |
| 3 | Different | Same | Second channel estimation manner | Second channel estimation manner |

(continued)

| Seque nce | A relationship between content of a pilot symbol and content of a preceding data symbol of the pilot symbol | A relationship between content of a pilot symbol and content of a next data symbol of the pilot symbol | A channel estimation manner of a pilot symbol when a delay spread or a maximum path is equal to or greater than a preset threshold | A channel estimation manner of a pilot symbol when a delay spread or a maximum path is less than a preset threshold |
|---|---|---|---|---|
| 4 | Different | Different | Second channel estimation manner | First channel estimation manner |

It should be noted that, in Table 5, the first channel estimation manner is the LS channel estimation manner or the MMSE channel estimation manner, and the second channel estimation manner is the matched filtering channel estimation manner.

In addition, it should be noted that, when the current pilot symbol is the first pilot symbol, for example, the pilot symbol 0 shown in FIG. 1, the second channel estimate (for example, the matched filtering channel estimate) may be regarded as the channel estimate of the first pilot symbol by default. In addition, when both the content of the preceding and next data symbols of the pilot symbol is the same as the content of the pilot symbol, as the first case shown in Table 5, whatever the delay spread or the maximum path is, the channel estimate of the pilot symbol may be obtained in the first channel estimation manner or the second channel estimation manner, and there is little difference between accuracy of obtained channel estimates.

In this embodiment, a suitable channel estimate is selected from a plurality of channel estimates according to content of the next pilot symbol, the content of the preceding and next data symbols, and the delay spread or the maximum path of the channel. This can further improve accuracy of the channel estimate and effectively improve channel estimation performance and demodulation performance of a linear frequency modulation signal.

Based on the above, the channel estimation method for a linear frequency modulation communications system according to the embodiments of the present disclosure can effectively ensure accuracy of the channel estimate and improve the channel estimation performance and demodulation performance of a linear frequency modulation signal, and is especially suitable for a small multipath channel and a small spreading factor SF.

The channel estimation apparatus for a linear frequency modulation communications system of this application is described in detail below with reference to the accompanying drawings.

For a first embodiment of the channel estimation apparatus:
Refer to FIG. 13, the channel estimation apparatus for a linear frequency modulation communications system may include: a first demodulation module 110 and a first channel estimation module 120. The first demodulation module 110 is configured to demodulate preceding and next data symbols of a next pilot symbol in advance according to a channel estimate of a current pilot symbol, to obtain content of the preceding and next data symbols of the next pilot symbol; and the first channel estimation module 120 is configured to adjust a start location of the next pilot symbol according to content of the next pilot symbol and the content of the preceding and next data symbols of the next pilot symbol, and perform channel estimation on the next pilot symbol at the start location, to obtain a channel estimate of the next pilot symbol.

Optionally, in some embodiments, the first channel estimation module 120 is specifically configured to: if the content of the next data symbol of the next pilot symbol is different from the content of the next pilot symbol, adjust the start location of the next pilot symbol to a first location, and perform channel estimation on the next pilot symbol at the first location, to obtain the channel estimate of the next pilot symbol; otherwise, adjust the start location of the next pilot symbol to a second location, and perform channel estimation on the next pilot symbol at the second location, to obtain the channel estimate of the next pilot symbol, where the first location is ahead of the second location.

Optionally, in some embodiments, the first channel estimation module 120 is specifically configured to: perform channel estimation on the next pilot symbol at the start location in any of an FFT channel estimation manner, a matched filtering channel estimation manner, an LS channel estimation manner and an MMSE channel estimation manner, to obtain the channel estimate of the next pilot symbol.

Optionally, in some embodiments, refer to FIG. 13, the channel estimation apparatus for a linear frequency modulation communications system may further include: a first filtering module 130, configured to: before the first demodulation module 110 demodulates preceding and next data symbols of a next pilot symbol in advance according to a channel estimate of a current pilot symbol, to obtain content of the preceding and next data symbols of the next pilot symbol, filter the channel estimate of the current pilot symbol.

It should be noted that, for the description of the first channel estimation apparatus for a linear frequency modulation communications system, please refer to the description of the first channel estimation method for a linear frequency modulation communications system in this application, and details are not described herein again.

In another example, the channel estimation apparatus for a linear frequency modulation communications system includes a processor, and the processor is configured to execute the foregoing program modules stored in a memory. The program modules include: the first demodulation module 110, configured to demodulate preceding and next data symbols of a next pilot symbol in advance according to a channel estimate of a current pilot symbol, to obtain content of the preceding and next data symbols of the next pilot symbol; the first channel estimation module 120, configured to adjust a start location of the next pilot symbol according to content of the next pilot symbol and the content of the preceding and next data symbols of the next pilot symbol, and perform channel estimation on the next pilot symbol at the start location, to obtain a channel estimate of the next pilot symbol; and the first filtering module 130, configured to: before the first demodulation module 110 demodulates preceding and next data symbols of a next pilot symbol in advance according to a channel estimate of a current pilot symbol, to obtain content of the preceding and next data symbols of the next pilot symbol, filter the channel estimate of the current pilot symbol.

For a second embodiment of the channel estimation apparatus:

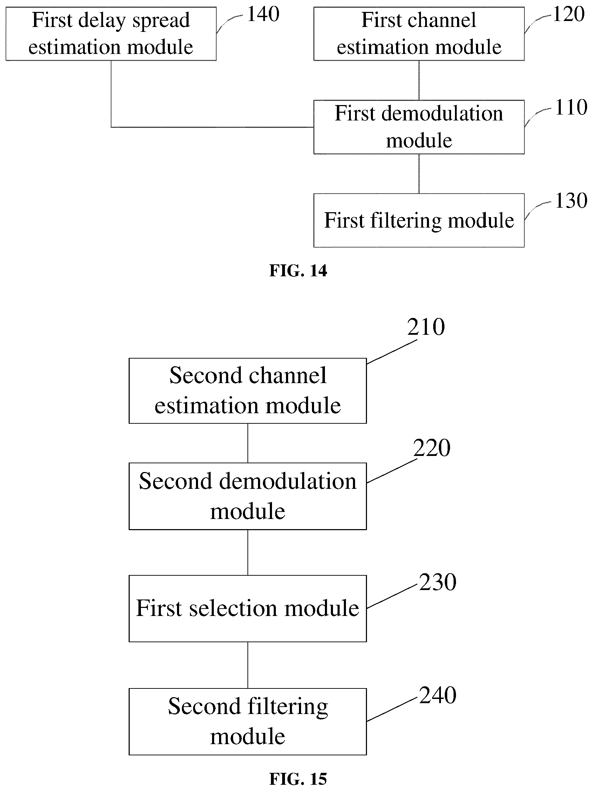

Refer to FIG. 14, the channel estimation apparatus for a linear frequency modulation communications system may include: a first demodulation module 110, a first channel estimation module 120 and a first delay spread estimation module 140. The first demodulation module 110 is configured to demodulate preceding and next data symbols of a next pilot symbol in advance according to a channel estimate of a current pilot symbol, to obtain content of the preceding and next data symbols of the next pilot symbol; the first delay spread estimation module 140 is configured to estimate a delay spread or a maximum path of a channel; and the first channel estimation module 120 is configured to adjust a start location of the next pilot symbol according to content of the next pilot symbol, the content of the preceding and next data symbols of the next pilot symbol, and the delay spread or the maximum path of the channel, and perform channel estimation on the next pilot symbol at the start location, to obtain a channel estimate of the next pilot symbol.

Optionally, in some embodiments, the first channel estimation module 120 is specifically configured to: when the delay spread or the maximum path is less than a preset threshold, if the content of the next data symbol of the next pilot symbol is the same as the content of the next pilot symbol, adjust the start location of the next pilot symbol to a second location, and perform channel estimation on the next pilot symbol at the second location, to obtain the channel estimate of the next pilot symbol; otherwise, adjust the start location of the next pilot symbol to a first location, and perform channel estimation on the next pilot symbol at the first location, to obtain the channel estimate of the next pilot symbol, where the first location is ahead of the second location; or when the delay spread or the maximum path is equal to or greater than the preset threshold, if the content of the preceding data symbol of the next pilot symbol is the same as the content of the next pilot symbol, adjust the start location of the next pilot symbol to the first location, and perform channel estimation on the next pilot symbol at the first location, to obtain the channel estimate of the next pilot symbol; otherwise, adjust the start location of the next pilot symbol to the second location, and perform channel estimation on the next pilot symbol at the second location, to obtain the channel estimate of the next pilot symbol.

Optionally, in some embodiments, the first channel estimation module 120 is specifically configured to: perform channel estimation on the next pilot symbol at the start location in any of an FFT channel estimation manner, a matched filtering channel estimation manner, an LS channel estimation manner and an MMSE channel estimation manner, to obtain the channel estimate of the next pilot symbol.

Optionally, in some embodiments, refer to FIG. 14, the channel estimation apparatus for a linear frequency modulation communications system may further include: a first filtering module 130, configured to: before the first demodulation module 110 demodulates preceding and next data symbols of a next pilot symbol in advance according to a channel estimate of a current pilot symbol, to obtain content of the preceding and next data symbols of the next pilot symbol, filter the channel estimate of the current pilot symbol.

Optionally, in some embodiments, the first delay spread estimation module 140 is specifically configured to: obtain a first delay spread or a first maximum path according to a synchronous signal; obtain a second delay spread or a second maximum path according to the pilot symbol; and estimate the delay spread of the channel according to at least one of the first delay spread and the second delay spread, or estimate the maximum path of the channel according to at least one of the first maximum path and the second maximum path.

Optionally, in some embodiments, the first delay spread estimation module 140 is specifically configured to: perform, if the synchronous signal is sent in an up chirp manner, pointwise multiplication on a received synchronous signal and a conjugate of the sent synchronous signal, and perform IFFT, to obtain a first power spectrum; or perform, if the synchronous signal is sent in a down chirp manner, pointwise multiplication on a received synchronous signal and a conjugate of the sent synchronous signal, and perform FFT, to obtain a second power spectrum; and obtain the first delay spread according to the first power spectrum or the second power spectrum through calculation, or obtain the first maximum path according to the first power spectrum or the second power spectrum through calculation.

Optionally, in some embodiments, the first delay spread estimation module 140 is specifically configured to: perform, if the pilot symbol is sent in an up chirp manner, pointwise multiplication on a received pilot symbol and a conjugate of the sent pilot symbol, and perform IFFT, to obtain a third power spectrum; or perform, if the pilot symbol is sent in a down chirp manner, pointwise multiplication on a received pilot symbol and a conjugate of the sent pilot symbol, and perform FFT, to obtain a fourth power spectrum; and obtain the second delay spread according to the third power spectrum or the fourth power spectrum through calculation, or obtain the second maximum path according to the third power spectrum or the fourth power spectrum through calculation.

Optionally, in some embodiments, the first delay spread estimation module 140 is specifically configured to: when estimating the delay spread of the channel according to at least one of the first delay spread and the second delay spread, filter the first delay spread to obtain the delay spread of the channel, or filter the second delay spread to obtain the delay spread of the channel, or perform weighting calculation on the filtered first delay spread and the filtered second delay spread, to obtain the delay spread of the channel.

Optionally, in some embodiments, the first delay spread estimation module 140 is specifically configured to: when estimating the maximum path of the channel according to at least one of the first maximum path and the second maximum path, filter the first maximum path to obtain the maximum path of the channel, or filter the second maximum path to obtain the maximum path of the channel, or perform weighting calculation on the filtered first maximum path and the filtered second maximum path, to obtain the maximum path of the channel.

It should be noted that, for description of the second channel estimation apparatus for a linear frequency modulation communications system, please refer to the description of the second channel estimation method for a linear frequency modulation communications system in this application, and details are not described herein again.

In another example, the channel estimation apparatus for a linear frequency modulation communications system includes a processor, and the processor is configured to execute the foregoing program modules stored in a memory. The program modules include: the first demodulation module 110, the first channel estimation module 120, the first delay spread estimation module 140, and the first filtering module 130.

For a third embodiment of the channel estimation apparatus:

Refer to FIG. 15, the channel estimation apparatus for a linear frequency modulation communications system includes: a second channel estimation module 210, a second demodulation module 220 and a first selection module 230. The second channel estimation module 210 is configured to perform channel estimation on each pilot symbol in a first channel estimation manner and a second channel estimation manner, to obtain a first channel estimate and a second channel estimate, where the first channel estimation manner includes either of an LS channel estimation manner and an MMSE channel estimation manner, and the second channel estimation manner includes a matched filtering channel estimation manner; the second demodulation module 220 is configured to demodulate preceding and next data symbols of a next pilot symbol in advance according to a channel estimate of a current pilot symbol, to obtain content of the preceding and next data symbols of the next pilot symbol; and the first selection module 230 is configured to select a channel estimate of the next pilot symbol from the first channel estimate and the second channel estimate according to the content of the preceding and next data symbols of the next pilot symbol, to obtain a channel estimate of each pilot symbol.

Optionally, in some embodiments, the first selection module 230 is specifically configured to: select the first channel estimate as the channel estimate of the next pilot symbol if the content of the next data symbol of the next pilot symbol is different from content of the next pilot symbol; otherwise, select the second channel estimate as the channel estimate of the next pilot symbol.

Optionally, in some embodiments, the first selection module 230 is further configured to: when the current pilot symbol is the first pilot symbol, regard the second channel estimate as the channel estimate of the first pilot symbol by default.

Optionally, in some embodiments, refer to FIG. 15, the channel estimation apparatus for a linear frequency modulation communications system may further include: a second filtering module 240, configured to: before the second demodulation module 220 uses the selected channel estimate of the next pilot symbol as the channel estimate of the current pilot symbol to demodulate in advance the preceding and next data symbols of the next pilot symbol, filter the selected channel estimate of the next pilot symbol.

It should be noted that, for the description of the third channel estimation apparatus for a linear frequency modulation communications system, please refer to the description of the third channel estimation method for a linear frequency modulation communications system in this application, and details are not described herein again.

In another example, the channel estimation apparatus for a linear frequency modulation communications system includes a processor, and the processor is configured to execute the foregoing program modules stored in a memory. The program modules include: the second channel estimation module 210, the second demodulation module 220, the first selection module 230, and the second filtering module 240.

For a fourth embodiment of the channel estimation apparatus:

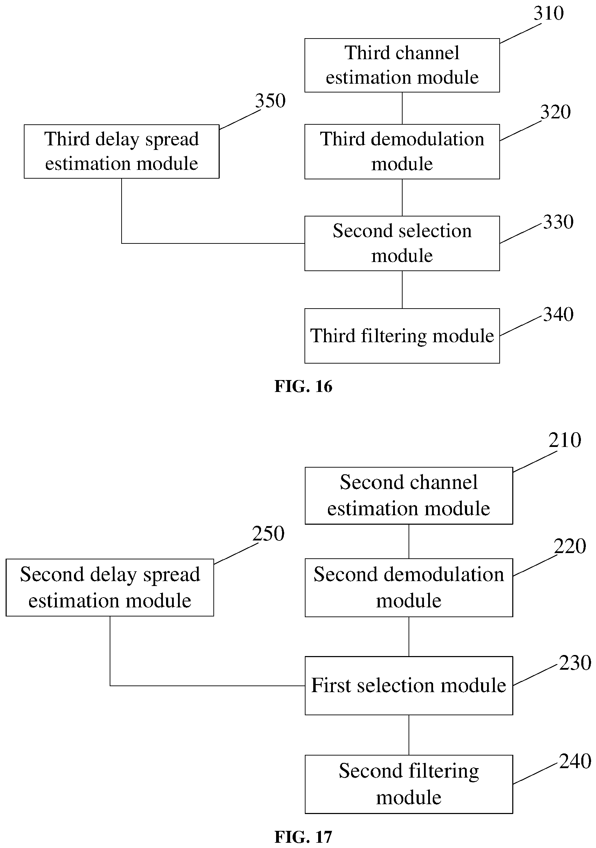

Refer to FIG. 16, the channel estimation apparatus for a linear frequency modulation communications system includes: a third channel estimation module 310, a third demodulation module 320, a third delay spread estimation module 350, and a second selection module 330. The third channel estimation module 310 is configured to perform channel estimation on each pilot symbol in a first channel estimation manner and a second channel estimation manner, to obtain a first channel estimate and a second channel estimate, where the first channel estimation manner is an FFT channel estimation manner, and the second channel estimation manner is a matched filtering channel estimation manner; the third demodulation module 320 is configured to demodulate preceding and next data symbols of a next pilot symbol in advance according to a channel estimate of a current pilot symbol, to obtain content of the preceding and next data symbols of the next pilot symbol; the third delay spread estimation module 350 is configured to estimate a delay spread or a maximum path of the channel; and the second selection module 330 is configured to select a channel estimate of the next pilot symbol from the first channel estimate and the second channel estimate according to the content of the preceding and next data symbols of the next pilot symbol and the delay spread or the maximum path, to obtain a channel estimate of each pilot symbol.

Optionally, in some embodiments, the second selection module 330 is specifically configured to: when the delay spread or the maximum path is equal to or greater than a preset threshold, if the content of the preceding data symbol of the next pilot symbol is the same as content of the next pilot symbol, select the first channel estimate as the channel estimate of the next pilot symbol; otherwise, select the second channel estimate as the channel estimate of the next pilot symbol; or when the delay spread or the maximum path is less than the preset threshold, if the content of the next data symbol of the next pilot symbol is the same as the content of the next pilot symbol, select the second channel estimate as the channel estimate of the next pilot symbol; otherwise, select the first channel estimate as the channel estimate of the next pilot symbol.

Optionally, in some embodiments, the second selection module 330 is further configured to: when the current pilot symbol is the first pilot symbol, regard the second channel estimate as the channel estimate of the first pilot symbol by default.

Optionally, in some embodiments, refer to FIG. 16, the channel estimation apparatus for a linear frequency modulation communications system may further include: a third filtering module 340, configured to: before the third demodulation module 320 uses the selected channel estimate of the next pilot symbol as the channel estimate of the current pilot symbol to demodulate in advance the preceding and next data symbols of the next pilot symbol, filter the selected channel estimate of the next pilot symbol.

Optionally, in some embodiments, the third delay spread estimation module 350 is specifically configured to: obtain a first delay spread or a first maximum path according to a synchronous signal; obtain a second delay spread or a second maximum path according to the pilot symbol; and estimate the delay spread of the channel according to at least one of the first delay spread and the second delay spread, or estimate the maximum path of the channel according to at least one of the first maximum path and the second maximum path.

Optionally, in some embodiments, the third delay spread estimation module 350 is specifically configured to: perform, if the synchronous signal is sent in an up chirp manner, pointwise multiplication on a received synchronous signal and a conjugate of the sent synchronous signal, and perform IFFT, to obtain a first power spectrum; or perform, if the synchronous signal is sent in a down chirp manner, pointwise multiplication on a received synchronous signal and a conjugate of the sent synchronous signal, and perform FFT, to obtain a second power spectrum; and obtain the first delay spread according to the first power spectrum or the second power spectrum through calculation, or obtain the first maximum path according to the first power spectrum or the second power spectrum through calculation.

Optionally, in some embodiments, the third delay spread estimation module 350 is specifically configured to: perform, if the pilot symbol is sent in an up chirp manner, pointwise multiplication on a received pilot symbol and a conjugate of the sent pilot symbol, and perform IFFT, to obtain a third power spectrum; or perform, if the pilot symbol is sent in a down chirp manner, pointwise multiplication on a received pilot symbol and a conjugate of the sent pilot symbol, and perform FFT, to obtain a fourth power spectrum; and obtain the second delay spread according to the third power spectrum or the fourth power spectrum through calculation, or obtain the second maximum path according to the third power spectrum or the fourth power spectrum through calculation.

Optionally, in some embodiments, the third delay spread estimation module 350 is specifically configured to: when estimating the delay spread of the channel according to at least one of the first delay spread and the second delay spread, filter the first delay spread to obtain the delay spread of the channel, or filter the second delay spread to obtain the delay spread of the channel, or perform weighting calculation on the filtered first delay spread and the filtered second delay spread, to obtain the delay spread of the channel.

Optionally, in some embodiments, the third delay spread estimation module 350 is specifically configured to: when estimating the maximum path of the channel according to at least one of the first maximum path and the second maximum path, filter the first maximum path to obtain the maximum path of the channel, or filter the second maximum path to obtain the maximum path of the channel, or perform weighting calculation on the filtered first maximum path and the filtered second maximum path, to obtain the maximum path of the channel.

It should be noted that, for the description of the fourth channel estimation apparatus for a linear frequency modulation communications system, please refer to the description of the fourth channel estimation method for a linear frequency modulation communications system in this application, and details are not described herein again.

In another example, the channel estimation apparatus for a linear frequency modulation communications system includes a processor, and the processor is configured to execute the foregoing program modules stored in a memory.

The program modules include: the third channel estimation module 310, the third demodulation module 320, the third delay spread estimation module 350, the second selection module 330 and the third filtering module 340.

For a fifth embodiment of the channel estimation apparatus:

Refer to FIG. 17, the channel estimation apparatus for a linear frequency modulation communications system includes: a second channel estimation module 210, a second demodulation module 220, a second delay spread estimation module 250 and a first selection module 230. The second channel estimation module 210 is configured to perform channel estimation on each pilot symbol in a first channel estimation manner and a second channel estimation manner, to obtain a first channel estimate and a second channel estimate, where the first channel estimation manner includes either of an LS channel estimation manner and an MMSE channel estimation manner, and the second channel estimation manner includes a matched filtering channel estimation manner; the second demodulation module 220 is configured to demodulate preceding and next data symbols of a next pilot symbol in advance according to a channel estimate of a current pilot symbol, to obtain content of the preceding and next data symbols of the next pilot symbol; the second delay spread estimation module 250 is configured to estimate a delay spread or a maximum path of the channel; and the first selection module 230 is configured to select a channel estimate of the next pilot symbol from the first channel estimate and the second channel estimate according to the content of the preceding and next data symbols of the next pilot symbol and the delay spread or the maximum path, to obtain a channel estimate of each pilot symbol.

Optionally, in some embodiments, the first selection module 230 is specifically configured to: when the delay spread or the maximum path is equal to or greater than a preset threshold, if the content of the preceding data symbol of the next pilot symbol is the same as content of the next pilot symbol, select the first channel estimate as the channel estimate of the next pilot symbol; otherwise, select the second channel estimate as the channel estimate of the next pilot symbol; or when the delay spread or the maximum path is less than the preset threshold, if the content of the next data symbol of the next pilot symbol is the same as the content of the next pilot symbol, select the second channel estimate as the channel estimate of the next pilot symbol; otherwise, select the first channel estimate as the channel estimate of the next pilot symbol.

Optionally, in some embodiments, the first selection module 230 is further configured to: when the current pilot symbol is the first pilot symbol, regard the second channel estimate as the channel estimate of the first pilot symbol by default.

Optionally, in some embodiments, refer to FIG. 17, the channel estimation apparatus for a linear frequency modulation communications system may further include: a second filtering module 240, configured to: before the second demodulation module 220 uses the channel estimate of the next pilot symbol as the channel estimate of the current pilot symbol to demodulate in advance the preceding and next data symbols of the next pilot symbol, filter the selected channel estimate of the next pilot symbol.

Optionally, in some embodiments, the second delay spread estimation module 250 is specifically configured to: obtain a first delay spread or a first maximum path according to a synchronous signal; obtain a second delay spread or a second maximum path according to the pilot symbol; and estimate the delay spread of the channel according to at least one of the first delay spread and the second delay spread, or estimate the maximum path of the channel according to at least one of the first maximum path and the second maximum path.

Optionally, in some embodiments, the second delay spread estimation module 250 is specifically configured to: perform, if the synchronous signal is sent in an up chirp manner, pointwise multiplication on a received synchronous signal and a conjugate of the sent synchronous signal, and perform IFFT, to obtain a first power spectrum; or perform, if the synchronous signal is sent in a down chirp manner, pointwise multiplication on a received synchronous signal and a conjugate of the sent synchronous signal, and perform FFT, to obtain a second power spectrum; and obtain the first delay spread according to the first power spectrum or the second power spectrum through calculation, or obtain the first maximum path according to the first power spectrum or the second power spectrum through calculation.

Optionally, in some embodiments, the second delay spread estimation module 250 is specifically configured to: perform, if the pilot symbol is sent in an up chirp manner, pointwise multiplication on a received pilot symbol and a conjugate of the sent pilot symbol, and perform IFFT, to obtain a third power spectrum; or perform, if the pilot symbol is sent in a down chirp manner, pointwise multiplication on a received pilot symbol and a conjugate of the sent pilot symbol, and perform FFT, to obtain a fourth power spectrum; and obtain the second delay spread according to the third power spectrum or the fourth power spectrum through calculation, or obtain the second maximum path according to the third power spectrum or the fourth power spectrum through calculation.

Optionally, in some embodiments, the second delay spread estimation module 250 is specifically configured to: when estimating the delay spread of the channel according to at least one of the first delay spread and the second delay spread, filter the first delay spread to obtain the delay spread of the channel, or filter the second delay spread to obtain the delay spread of the channel, or perform weighting calculation on the filtered first delay spread and the filtered second delay spread, to obtain the delay spread of the channel.

Optionally, in some embodiments, the second delay spread estimation module 250 is specifically configured to: when estimating the maximum path of the channel according to at least one of the first maximum path and the second maximum path, filter the first maximum path to obtain the maximum path of the channel, or filter the second maximum path to obtain the maximum path of the channel, or perform weighting calculation on the filtered first maximum path and the filtered second maximum path, to obtain the maximum path of the channel.

It should be noted that, for the description of the fifth channel estimation apparatus for a linear frequency modulation communications system, please refer to the description of the fifth channel estimation method for a linear frequency modulation communications system in this application, and details are not described herein again.

In another example, the channel estimation apparatus for a linear frequency modulation communications system includes a processor, and the processor is configured to execute the foregoing program modules stored in a memory. The program modules include: the second channel estimation module 210, the second demodulation module 220, the second delay spread estimation module 250, the first selection module 230 and the second filtering module 240.

The channel estimation apparatus for a linear frequency modulation communications system according to the embodiments of the present disclosure can effectively ensure accuracy of the channel estimate and improve the channel estimation performance and demodulation performance of a linear frequency modulation signal, and is especially suitable for a small multipath channel and a small spreading factor SF.

In some embodiments, a linear frequency modulation communications system is provided. The system may include any of the first to the fifth channel estimation apparatuses for a linear frequency modulation communications system. The system can effectively ensure accuracy of a channel estimate and improve channel estimation performance and demodulation performance of a linear frequency modulation signal by any of the channel estimation apparatuses for a linear frequency modulation communications system.

In some embodiments, a computer-readable storage medium is provided. A channel estimation program for a linear frequency modulation communications system is stored in the computer-readable storage medium, and the channel estimation program is executed by a processor to achieve any of the first to the fifth channel estimation methods for a linear frequency modulation communications system. The storage medium can effectively ensure accuracy of a channel estimate and improve channel estimation performance and demodulation performance of a linear frequency modulation signal by performing any of the channel estimation methods for a linear frequency modulation communications system.

In some embodiments, a chip is provided. The chip includes a memory and a processor. A computer program is stored in the memory, and the computer program is executed by the processor to achieve any of the first to the fifth channel estimation methods for a linear frequency modulation communications system. The chip can effectively ensure accuracy of a channel estimate and improve channel estimation performance and demodulation performance of a linear frequency modulation signal by performing any of the channel estimation methods for a linear frequency modulation communications system.

It should be noted that, the logic and/or steps represented in the flow chart or described in other manners herein, for example, may be considered as a sequenced list of executable instructions for implementing logical functions, and may be implemented in any computer-readable medium, for use by instruction execution systems, apparatuses, or devices (such as computer-based systems, systems including processors, or other systems that can fetch instructions from the instruction execution systems, apparatuses, or devices and execute the instructions), or used in combination with these instruction execution systems, apparatuses, or devices. For the purposes of this specification, a "computer-readable medium" may be any apparatus that can contain, store, communicate, propagate, or transmit a program for use by instruction execution systems, apparatuses, or devices or in combination with these instruction execution systems, apparatuses, or devices. More specific examples (a non-exhaustive list) of the computer-readable medium include the following: an electrical connection (electronic device) with one or more wiring, a portable computer disk cartridge (magnetic device), a random access memory (RAM), a read-only memory (ROM), an erasable and editable read-only memory (an EPROM or a flash memory), a fiber optic device, and a portable compact disk read-only memory (CDROM). In addition, the computer-readable medium may even be a paper or other suitable mediums on which the program can be printed, because the program may be obtained electronically, for example, by optically scanning the paper or other mediums, followed by editing, interpreting, or processing in other suitable manners if necessary. The program is then stored in a computer memory.

It should be understood that the present disclosure may be implemented by hardware, software, firmware, or a combination thereof. In the foregoing implementations, multiple steps or methods may be implemented by software or firmware that is stored in a memory and that is executed by a proper instruction execution system. For example, if implemented by hardware, as in another embodiment, this implementation may be implemented by any one or a combination of the following technologies known in the art: a discrete logic circuit with a logic gate circuit for implementing a logic function on a data symbol, an application-specific integrated circuit with a suitable combinational logic gate circuit, a programmable gate array (PGA), a field programmable gate array (FPGA), and the like.

In the specification, the description of "one embodiment", "some embodiments", "an example", "a specific example" and "some examples" means that a specific feature, structure, material or characteristic described in combination with the embodiment (s) or example (s) are included in at least one embodiment or example of the present disclosure. In this specification, the schematic representation of the above terms does not necessarily refer to the same embodiment or example. Moreover, the specific features, structures, materials or characteristics described may be combined in any suitable manner in any one or more embodiments or examples.

Moreover, the terms "first" and "second" are used only for the purpose of description and should not be construed as indicating or implying a relative importance, or implicitly indicating a quantity of indicated technical features. Therefore, features defined by "first" and "second" may explicitly or implicitly include at least one of the features. In description of the present disclosure, "a plurality of" means at least two, for example, two or three, unless otherwise clearly and specifically limited.

In the present disclosure, unless otherwise clearly limited, the terms "installation", "interconnection", "connection" and "fixation" etc. are intended to be understood in a broad sense. For example, the "connection" may be a fixed connection, removable connection or integral connection; may be a mechanical connection or electrical connection; may be a direct connection or indirect connection using a medium; and may be a communication or interaction between two elements, unless otherwise clearly specified and limited. Those of ordinary skill in the art may understand specific meanings of the above terms in the present disclosure based on a specific situation.

Although the embodiments of the present disclosure have been illustrated and described above, it will be appreciated that the above embodiments are illustrative and should not be construed as limiting the scope of the present disclosure. Changes, modifications, substitutions and variations can be made to the above embodiments by a person of ordinary skill in the art within the scope of the present disclosure.

**Claims**

1. A channel estimation method for a linear frequency modulation communications system, comprising the following steps:

   demodulating preceding and next data symbols of a next pilot symbol in advance according to a channel estimate of a current pilot symbol, to obtain content of the preceding and next data symbols of the next pilot symbol; and
   adjusting a start location of the next pilot symbol according to content of the next pilot symbol and the content of the preceding and next data symbols of the next pilot symbol, and performing channel estimation on the next pilot symbol at the start location, to obtain a channel estimate of the next pilot symbol.

2. The channel estimation method for a linear frequency modulation communications system according to claim 1, wherein the adjusting a start location of the next pilot symbol according to content of the next pilot symbol and the content of the preceding and next data symbols of the next pilot symbol, and performing channel estimation on the next pilot symbol at the start location, to obtain a channel estimate of the next pilot symbol comprises:
   if the content of the next data symbol of the next pilot symbol is different from the content of the next pilot symbol, adjusting the start location of the next pilot symbol to a first location, and performing channel estimation on the next pilot symbol at the first location, to obtain the channel estimate of the next pilot symbol; otherwise, adjusting the start location of the next pilot symbol to a second location, and performing channel estimation on the next pilot symbol at the second location, to obtain the channel estimate of the next pilot symbol, wherein the first location is ahead of the second location.

3. The channel estimation method for a linear frequency modulation communications system according to claim 1, wherein the method further comprises:

   estimating a delay spread or a maximum path of a channel; and
   adjusting a start location of the next pilot symbol according to the content of the next pilot symbol, the content of the preceding and next data symbols of the next pilot symbol, and the delay spread or the maximum path, and performing channel estimation on the next pilot symbol at the start location, to obtain a channel estimate of the next pilot symbol.

4. The channel estimation method for a linear frequency modulation communications system according to claim 3, wherein the adjusting a start location of the next pilot symbol according to the content of the next pilot symbol, the content of the preceding and next data symbols of the next pilot symbol, and the delay spread or the maximum path, and performing channel estimation on the next pilot symbol at the start location, to obtain a channel estimate of the next pilot symbol comprises:

   when the delay spread or the maximum path is less than a preset threshold, if the content of the next data symbol of the next pilot symbol is the same as the content of the next pilot symbol, adjusting the start location of the next pilot symbol to a second location, and performing channel estimation on the next pilot symbol at the second location, to obtain the channel estimate of the next pilot symbol; otherwise, adjusting the start location of the next pilot symbol to a first location, and performing channel estimation on the next pilot symbol at the first location, to obtain the channel estimate of the next pilot symbol, wherein the first location is ahead of the second location; or

when the delay spread or the maximum path is equal to or greater than the preset threshold, if the content of the preceding data symbol of the next pilot symbol is the same as the content of the next pilot symbol, adjusting the start location of the next pilot symbol to the first location, and performing channel estimation on the next pilot symbol at the first location, to obtain the channel estimate of the next pilot symbol; otherwise, adjusting the start location of the next pilot symbol to the second location, and performing channel estimation on the next pilot symbol at the second location, to obtain the channel estimate of the next pilot symbol.

5. The channel estimation method for a linear frequency modulation communications system according to claim 3, wherein the estimating a delay spread or a maximum path of a channel comprises:

obtaining a first delay spread or a first maximum path according to a synchronous signal;
obtaining a second delay spread or a second maximum path according to the pilot symbol; and
estimating the delay spread of the channel according to at least one of the first delay spread and the second delay spread, or estimating the maximum path of the channel according to at least one of the first maximum path and the second maximum path.

6. The channel estimation method for a linear frequency modulation communications system according to claim 5, wherein the obtaining a first delay spread or a first maximum path according to a synchronous signal comprises:

performing, if the synchronous signal is sent in an up chirp manner, pointwise multiplication on a received synchronous signal and a conjugate of the sent synchronous signal, and performing inverse fast Fourier transform (IFFT), to obtain a first power spectrum; or
performing, if the synchronous signal is sent in a down chirp manner, pointwise multiplication on a received synchronous signal and a conjugate of the sent synchronous signal, and performing fast Fourier transform (FFT), to obtain a second power spectrum; and
obtaining the first delay spread according to the first power spectrum or the second power spectrum through calculation, or obtaining the first maximum path according to the first power spectrum or the second power spectrum through calculation.

7. The channel estimation method for a linear frequency modulation communications system according to claim 5, wherein the obtaining a second delay spread or a second maximum path according to the pilot symbol comprises:

performing, if the pilot symbol is sent in an up chirp manner, pointwise multiplication on a received pilot symbol and a conjugate of the sent pilot symbol, and performing IFFT, to obtain a third power spectrum; or
performing, if the pilot symbol is sent in a down chirp manner, pointwise multiplication on a received pilot symbol and a conjugate of the sent pilot symbol, and performing FFT, to obtain a fourth power spectrum; and
obtaining the second delay spread according to the third power spectrum or the fourth power spectrum through calculation, or obtaining the second maximum path according to the third power spectrum or the fourth power spectrum through calculation.

8. The channel estimation method for a linear frequency modulation communications system according to claim 5, wherein the estimating the delay spread of the channel according to at least one of the first delay spread and the second delay spread comprises:
filtering the first delay spread to obtain the delay spread of the channel, or filtering the second delay spread to obtain the delay spread of the channel, or performing weighting calculation on the filtered first delay spread and the filtered second delay spread, to obtain the delay spread of the channel.

9. The channel estimation method for a linear frequency modulation communications system according to claim 5, wherein the estimating the maximum path of the channel according to at least one of the first maximum path and the second maximum path comprises:
filtering the first maximum path to obtain the maximum path of the channel, or filtering the second maximum path to obtain the maximum path of the channel, or performing weighting calculation on the filtered first maximum path and the filtered second maximum path, to obtain the maximum path of the channel.

**10.** The channel estimation method for a linear frequency modulation communications system according to any one of claims 1 to 9, wherein channel estimation is performed on the next pilot symbol at the start location in any of an FFT channel estimation manner, a matched filtering channel estimation manner, a least square (LS) channel estimation manner and a minimum mean square error (MMSE) channel estimation manner, to obtain the channel estimate of the next pilot symbol.

**11.** The channel estimation method for a linear frequency modulation communications system according to claim 1, before the demodulating preceding and next data symbols of a next pilot symbol in advance according to a channel estimate of a current pilot symbol, to obtain content of the preceding and next data symbols of the next pilot symbol, further comprising filtering the channel estimate of the current pilot symbol.

**12.** A channel estimation method for a linear frequency modulation communications system, comprising the following steps:

performing channel estimation on each pilot symbol in a first channel estimation manner and a second channel estimation manner, to obtain a first channel estimate and a second channel estimate, wherein the first channel estimation manner comprises either of an LS channel estimation manner and an MMSE channel estimation manner, and the second channel estimation manner comprises a matched filtering channel estimation manner; demodulating preceding and next data symbols of a next pilot symbol in advance according to a channel estimate of a current pilot symbol, to obtain content of the preceding and next data symbols of the next pilot symbol; and selecting a channel estimate of the next pilot symbol from the first channel estimate and the second channel estimate according to the content of the preceding and next data symbols of the next pilot symbol, to obtain a channel estimate of each pilot symbol.

**13.** A channel estimation method for a linear frequency modulation communications system, comprising the following steps:

performing channel estimation on each pilot symbol in a first channel estimation manner and a second channel estimation manner, to obtain a first channel estimate and a second channel estimate, wherein the first channel estimation manner is an FFT channel estimation manner, and the second channel estimation manner is a matched filtering channel estimation manner; demodulating preceding and next data symbols of a next pilot symbol in advance according to a channel estimate of a current pilot symbol, to obtain content of the preceding and next data symbols of the next pilot symbol, and estimating a delay spread or a maximum path of a channel; and selecting a channel estimate of the next pilot symbol from the first channel estimate and the second channel estimate according to the content of the preceding and next data symbols of the next pilot symbol and the delay spread or the maximum path, to obtain a channel estimate of each pilot symbol.

**14.** The channel estimation method for a linear frequency modulation communications system according to claim 12, wherein the selecting a channel estimate of the next pilot symbol from the first channel estimate and the second channel estimate according to the content of the preceding and next data symbols of the next pilot symbol comprises: selecting the first channel estimate as the channel estimate of the next pilot symbol if the content of the next data symbol of the next pilot symbol is different from content of the next pilot symbol; otherwise, selecting the second channel estimate as the channel estimate of the next pilot symbol.

**15.** The channel estimation method for a linear frequency modulation communications system according to claim 12, wherein the method further comprises:

estimating a delay spread or a maximum path of a channel; and selecting a channel estimate of the next pilot symbol from the first channel estimate and the second channel estimate according to the content of the preceding and next data symbols of the next pilot symbol and the delay spread or the maximum path, to obtain a channel estimate of each pilot symbol.

**16.** The channel estimation method for a linear frequency modulation communications system according to claim 13 or 15, wherein the selecting a channel estimate of the next pilot symbol from the first channel estimate and the second channel estimate according to the content of the preceding and next data symbols of the next pilot symbol and the delay spread or the maximum path comprises:

when the delay spread or the maximum path is equal to or greater than a preset threshold, if the content of the preceding data symbol of the next pilot symbol is the same as content of the next pilot symbol, selecting the first channel estimate as the channel estimate of the next pilot symbol; otherwise, selecting the second channel estimate as the channel estimate of the next pilot symbol; or

when the delay spread or the maximum path is less than the preset threshold, if the content of the next data symbol of the next pilot symbol is the same as the content of the next pilot symbol, selecting the second channel estimate as the channel estimate of the next pilot symbol; otherwise, selecting the first channel estimate as the channel estimate of the next pilot symbol.

17. The channel estimation method for a linear frequency modulation communications system according to claim 13 or 15, wherein the estimating a delay spread or a maximum path of the channel comprises:

obtaining a first delay spread or a first maximum path according to a synchronous signal;
obtaining a second delay spread or a second maximum path according to the pilot symbol; and
estimating the delay spread of the channel according to at least one of the first delay spread and the second delay spread, or estimating the maximum path of the channel according to at least one of the first maximum path and the second maximum path.

18. The channel estimation method for a linear frequency modulation communications system according to claim 17, wherein the obtaining a first delay spread or a first maximum path according to a synchronous signal comprises:

performing, if the synchronous signal is sent in an up chirp manner, pointwise multiplication on a received synchronous signal and a conjugate of the sent synchronous signal, and performing IFFT, to obtain a first power spectrum; or
performing, if the synchronous signal is sent in a down chirp manner, pointwise multiplication on a received synchronous signal and a conjugate of the sent synchronous signal, and performing FFT, to obtain a second power spectrum; and
obtaining the first delay spread according to the first power spectrum or the second power spectrum through calculation, or obtaining the first maximum path according to the first power spectrum or the second power spectrum through calculation.

19. The channel estimation method for a linear frequency modulation communications system according to claim 17, wherein the obtaining a second delay spread or a second maximum path according to the pilot symbol comprises:

performing, if the pilot symbol is sent in an up chirp manner, pointwise multiplication on a received pilot symbol and a conjugate of the sent pilot symbol, and performing IFFT, to obtain a third power spectrum; or
performing, if the pilot symbol is sent in a down chirp manner, pointwise multiplication on a received pilot symbol and a conjugate of the sent pilot symbol, and performing FFT, to obtain a fourth power spectrum; and
obtaining the second delay spread according to the third power spectrum or the fourth power spectrum through calculation, or obtaining the second maximum path according to the third power spectrum or the fourth power spectrum through calculation.

20. The channel estimation method for a linear frequency modulation communications system according to claim 17, wherein the estimating the delay spread of the channel according to at least one of the first delay spread and the second delay spread comprises:
filtering the first delay spread to obtain the delay spread of the channel, or filtering the second delay spread to obtain the delay spread of the channel, or performing weighting calculation on the filtered first delay spread and the filtered second delay spread, to obtain the delay spread of the channel.

21. The channel estimation method for a linear frequency modulation communications system according to claim 17, wherein the estimating the maximum path of the channel according to at least one of the first maximum path and the second maximum path comprises:
filtering the first maximum path to obtain the maximum path of the channel, or filtering the second maximum path to obtain the maximum path of the channel, or performing weighting calculation on the filtered first maximum path and the filtered second maximum path, to obtain the maximum path of the channel.

22. The channel estimation method for a linear frequency modulation communications system according to claim 12 or 13, wherein when the current pilot symbol is a first pilot symbol, regarding the second channel estimate as the channel estimate of the first pilot symbol by default.

23. The channel estimation method for a linear frequency modulation communications system according to claim 12 or 13, before selecting the channel estimate of the next pilot symbol as the channel estimate of the current pilot symbol to demodulate in advance the preceding and next data symbols of the next pilot symbol, further comprising filtering the selected channel estimate of the next pilot symbol.

24. A channel estimation apparatus for a linear frequency modulation communications system comprising:

a first demodulation module, configured to demodulate preceding and next data symbols of a next pilot symbol in advance according to a channel estimate of a current pilot symbol, to obtain content of the preceding and next data symbols of the next pilot symbol; and
a first channel estimation module, configured to adjust a start location of the next pilot symbol according to content of the next pilot symbol and the content of the preceding and next data symbols of the next pilot symbol, and perform channel estimation on the next pilot symbol at the start location, to obtain a channel estimate of the next pilot symbol.

25. A channel estimation apparatus for a linear frequency modulation communications system, comprising:

a second channel estimation module, configured to perform channel estimation on each pilot symbol in a first channel estimation manner and a second channel estimation manner, to obtain a first channel estimate and a second channel estimate, wherein the first channel estimation manner comprises either of an LS channel estimation manner and an MMSE channel estimation manner, and the second channel estimation manner comprises a matched filtering channel estimation manner;
a second demodulation module, configured to demodulate preceding and next data symbols of a next pilot symbol in advance according to a channel estimate of a current pilot symbol, to obtain content of the preceding and next data symbols of the next pilot symbol; and
a first selection module, configured to select a channel estimate of the next pilot symbol from the first channel estimate and the second channel estimate according to the content of the preceding and next data symbols of the next pilot symbol, to obtain a channel estimate of each pilot symbol.

26. A channel estimation apparatus for a linear frequency modulation communications system, comprising:

a third channel estimation module, configured to perform channel estimation on each pilot symbol in a first channel estimation manner and a second channel estimation manner, to obtain a first channel estimate and a second channel estimate, wherein the first channel estimation manner is an FFT channel estimation manner, and the second channel estimation manner is a matched filtering channel estimation manner;
a third demodulation module, configured to demodulate preceding and next data symbols of a next pilot symbol in advance according to a channel estimate of a current pilot symbol, to obtain content of the preceding and next data symbols of the next pilot symbol;
a third delay spread estimation module, configured to estimate a delay spread or a maximum path of a channel; and
a second selection module, configured to select a channel estimate of the next pilot symbol from the first channel estimate and the second channel estimate according to the content of the preceding and next data symbols of the next pilot symbol and the delay spread or the maximum path, to obtain a channel estimate of each pilot symbol.

27. A linear frequency modulation communications system, comprising the channel estimation apparatus for a linear frequency modulation communications system according to any one of claims 24 to 26.

28. A computer-readable storage medium, wherein a channel estimation program for a linear frequency modulation communications system is stored in the computer-readable storage medium, and the channel estimation program is executed by a processor to achieve the channel estimation method for a linear frequency modulation communications system according to any one of claims 1 to 23.

29. A chip, comprising a memory and a processor, wherein a computer program is stored in the memory, and the computer program is executed by the processor to achieve the channel estimation method for a linear frequency modulation communications system according to any one of claims 1 to 23.

Pilot symbol 0 | Data symbol 1 | ⋮ | Data symbol N-1 | Pilot symbol N | Data symbol N+1 | ⋮ | Data symbol 2N-1 | Pilot symbol 2N | Data symbol 2N+1 | ⋮ | Data symbol 3N-1 | ⋮

**FIG. 1**

Demodulate preceding and next data symbols of a next pilot symbol in advance according to a channel estimate of a current pilot symbol, to obtain content of the preceding and next data symbols of the next pilot symbol — S101

Adjust a start location of the next pilot symbol according to content of the next pilot symbol and the content of the preceding and next data symbols of the next pilot symbol, and perform channel estimation on the next pilot symbol at the start location, to obtain a channel estimate of the next pilot symbol — S102

**FIG. 2**

Pilot symbol → Convolution operation → Channel estimate

Matched filter

**FIG. 3**

Pilot symbol → [ Pointwise multiplication ] → [ IFFT ] → [ Multiply by a phase ] → Channel estimate

↑ Conjugate of a sent symbol

**FIG. 4**

Demodulate preceding and next data symbols of a next pilot symbol in advance according to a channel estimate of a current pilot symbol, to obtain content of the preceding and next data symbols of the next pilot symbol, and estimate a delay spread or a maximum path of channel estimation — S201

Adjust a start location of the next pilot symbol according to content of the next pilot symbol, the content of the preceding and next data symbols of the next pilot symbol, and the delay spread or the maximum path, and perform channel estimation on the next pilot symbol at the start location, to obtain a channel estimate of the next pilot symbol — S202

**FIG. 5**

Obtain a first delay spread according to a synchronous signal — S301

Obtain a second delay spread according to a pilot symbol — S302

Estimate a delay spread of channel estimation according to at least one of the first delay spread and the second delay spread — S303

**FIG. 6a**

| Obtain a first maximum path according to a synchronous signal | S401 | Obtain a second maximum path according to a pilot symbol | S402 |

Estimate a maximum path of channel estimation according to at least one of the first maximum path and the second maximum path

S403

**FIG. 6b**

Perform channel estimation on each pilot symbol in a first channel estimation manner and a second channel estimation manner, to obtain a first channel estimate and a second channel estimate. The first channel estimation manner includes any of an FFT channel estimation manner, an LS channel estimation manner, and an MMSE channel estimation manner, and the second channel estimation manner includes a matched filtering channel estimation manner

S501

Demodulate preceding and next data symbols of a next pilot symbol in advance according to a channel estimate of a current pilot symbol, to obtain content of the preceding and next data symbols of the next pilot symbol

S502

Select a channel estimate of the next pilot symbol from the first channel estimate and the second channel estimate according to the content of the preceding and next data symbols of the next pilot symbol, to obtain a channel estimate of each pilot symbol

S503

**FIG. 7**

Receive data

Perform channel estimation on each pilot symbol in a matched filtering channel estimation manner and an FFT channel estimation manner, to obtain a matched filtering channel estimate and an FFT channel estimate of each pilot symbol — S601

Regard a matched filtering channel estimate as a channel estimate of a first pilot symbol, that is, a pilot symbol 0 by default, and estimate sending content of all symbols 1 to N+1 by using the channel estimate of the pilot symbol 0 — S602

Select a channel estimate of a pilot symbol iN according to content of preceding and next data symbols iN-1 and iN+1 of the pilot symbol iN — S603

Filter the determined channel estimate of the pilot symbol iN, to obtain a filtered channel estimate of the pilot symbol iN — S604

Estimate sending content of all symbols iN+2 to (i+1)N+1 by using the filtered channel estimate of the pilot symbol iN — S605

FIG. 8

Perform channel estimation on each pilot symbol in a first channel estimation manner and a second channel estimation manner, to obtain a first channel estimate and a second channel estimate. The first channel estimation manner is an FFT channel estimation manner, and the second channel estimation manner is a matched filtering channel estimation manner ⟋ S701

↓

Demodulate preceding and next data symbols of a next pilot symbol in advance according to a channel estimate of a current pilot symbol, to obtain content of the preceding and next data symbols of the next pilot symbol, and estimate a delay spread or a maximum path of the channel estimation ⟋ S702

↓

Select a channel estimate of the next pilot symbol from the first channel estimate and the second channel estimate according to the content of the preceding and next data symbols of the next pilot symbol and the delay spread or the maximum path, to obtain a channel estimate of each pilot symbol ⟋ S703

**FIG. 9**

Receive data

Perform channel estimation on each pilot symbol in a matched filtering channel estimation manner and an FFT channel estimation manner, to obtain a matched filtering channel estimate and an FFT channel estimate of each pilot symbol — S801

Regard a matched filtering channel estimate as a channel estimate of the first pilot symbol, that is, a pilot symbol 0 by default, and estimate sending content of all symbols 1 to N+1 by using the channel estimate of the pilot symbol 0 — S802

Select a channel estimate of a pilot symbol iN according to content of preceding and next data symbols iN-1 and iN+1 of the pilot symbol iN and a delay spread or a maximum path — S803

Filter the determined channel estimate of the pilot symbol iN, to obtain a filtered channel estimate of the pilot symbol iN — S804

Estimate sending content of all symbols iN+2 to (i+1)N+1 by using the filtered channel estimate of the pilot symbol iN — S805

**FIG. 10**

**FIG. 11a**

**FIG. 11b**

Perform channel estimation on each pilot symbol in a first channel estimation manner and a second channel estimation manner, to obtain a first channel estimate and a second channel estimate. The first channel estimation manner includes either of an LS channel estimation manner and an MMSE channel estimation manner, and the second channel estimation manner includes a matched filtering channel estimation manner | S901

↓

Demodulate preceding and next data symbols of a next pilot symbol in advance according to a channel estimate of a current pilot symbol, to obtain content of the preceding and next data symbols of the next pilot symbol, and estimate a delay spread or a maximum path of the channel estimation | S902

↓

Select a channel estimate of the next pilot symbol from the first channel estimate and the second channel estimate according to the content of the preceding and next data symbols of the next pilot symbol and the delay spread or the maximum path, to obtain a channel estimate of each pilot symbol | S903

**FIG. 12**

First channel estimation module | 120

First demodulation module | 110

First filtering module | 130

**FIG. 13**

First delay spread estimation module ⌐140

First channel estimation module ⌐120

First demodulation module ⌐110

First filtering module ⌐130

**FIG. 14**

Second channel estimation module ⌐210

Second demodulation module ⌐220

First selection module ⌐230

Second filtering module ⌐240

**FIG. 15**

Third channel estimation module ⌐310

Third delay spread estimation module ⌐350

Third demodulation module ⌐320

Second selection module ⌐330

Third filtering module ⌐340

**FIG. 16**

Second channel estimation module ⌐210

Second delay spread estimation module ⌐250

Second demodulation module ⌐220

First selection module ⌐230

Second filtering module ⌐240

**FIG. 17**

## INTERNATIONAL SEARCH REPORT

| International application No. |
|---|
| **PCT/CN2021/117273** |

**A. CLASSIFICATION OF SUBJECT MATTER**

H04L 27/26(2006.01)i

According to International Patent Classification (IPC) or to both national classification and IPC

**B. FIELDS SEARCHED**

Minimum documentation searched (classification system followed by classification symbols)

H04L; H04W

Documentation searched other than minimum documentation to the extent that such documents are included in the fields searched

Electronic data base consulted during the international search (name of data base and, where practicable, search terms used)

CNPAT; CNKI; WPI; EPODOC: 线性调频, 信道估计, 匹配滤波, 导频, 前导码, 解调, 调制, 干扰, 符号, chirp, modulat+, demodulat+, channel estimation, matched filter, pilot, preamble, interference, signnal

**C. DOCUMENTS CONSIDERED TO BE RELEVANT**

| Category* | Citation of document, with indication, where appropriate, of the relevant passages | Relevant to claim No. |
|---|---|---|
| PX | CN 112260974 A (BEIJING I-SPRINT INNOVATIONS PTE LTD. et al.) 22 January 2021 (2021-01-22)<br>description, paragraphs [0039]-[0082] | 1-29 |
| A | CN 101212429 A (PEKING UNIVERSITY FOUNDER GROUP CO., LTD. et al.) 02 July 2008 (2008-07-02)<br>description, page 13 paragraph 3 to page 14 paragraph 1 | 1-29 |
| A | CN 106788629 A (HARBIN INSTITUTE OF TECHNOLOGY) 31 May 2017 (2017-05-31)<br>entire document | 1-29 |
| A | US 2018351768 A1 (SILICON LABORATORIES INC.) 06 December 2018 (2018-12-06)<br>entire document | 1-29 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **05 November 2021** | **25 November 2021** |

| Name and mailing address of the ISA/CN | Authorized officer |
|---|---|
| **China National Intellectual Property Administration (ISA/ CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/117273**

| Patent document cited in search report | | | Publication date (day/month/year) | Patent family member(s) | Publication date (day/month/year) |
|---|---|---|---|---|---|
| CN | 112260974 | A | 22 January 2021 | None | |
| CN | 101212429 | A | 02 July 2008 | None | |
| CN | 106788629 | A | 31 May 2017 | None | |
| US | 2018351768 | A1 | 06 December 2018 | None | |

Form PCT/ISA/210 (patent family annex) (January 2015)

**REFERENCES CITED IN THE DESCRIPTION**

**Patent documents cited in the description**

- CN 202010941423